(19) Europäisches Patentamt

European Patent Office

Office européen des brevets

(11) **EP 2 471 826 A1**

(12) **EUROPEAN PATENT APPLICATION**
published in accordance with Art. 153(4) EPC

(43) Date of publication:
**04.07.2012 Bulletin 2012/27**

(21) Application number: **10822013.8**

(22) Date of filing: **05.10.2010**

(51) Int Cl.:
**C08F 2/44** (2006.01)       **C08F 291/06** (2006.01)
**C08G 18/63** (2006.01)       **C08G 101/00** (2006.01)

(86) International application number:
**PCT/JP2010/067462**

(87) International publication number:
**WO 2011/043343 (14.04.2011 Gazette 2011/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2009 JP 2009231931**

(71) Applicant: **Asahi Glass Company, Limited**
**Tokyo 100-8405 (JP)**

(72) Inventors:
• **SASAKI, Takayuki**
**Tokyo 100-8405 (JP)**

• **KUMAGAI, Naohiro**
**Tokyo 100-8405 (JP)**
• **SUZUKI, Chitoshi**
**Tokyo 100-8405 (JP)**
• **SASAO, Yasuyuki**
**Tokyo 100-8405 (JP)**
• **KURATI, Jun**
**Tokyo 100-8405 (JP)**

(74) Representative: **Blodig, Wolfgang**
**Wächtershäuser & Hartz**
**Patentanwaltspartnerschaft**
**Ottostrasse 4**
**80333 München (DE)**

(54) **POLYMER-DISPERSED POLYOL AND METHOD FOR MANUFACTURING A SOFT POLYURETHANE FOAM**

(57) To provide a polymer-dispersed polyol made by using materials derived from a natural fat/oil, which has a low viscosity, without lowering the biomass degree and without impairing the performance of a flexible polyurethane foam to be obtained. Further, to provide a process for producing a flexible polyurethane foam using the polymer-dispersed polyol.

A polymer-dispersed polyol, comprising polymer particles dispersed in a matrix containing a polyol (a1) derived from a natural fat/oil and an epoxidized natural fat/oil (x). And, a process for producing a flexible polyurethane foam, which comprises reacting a polyol containing the above polymer-dispersed polyol and a polyisocyanate compound in the presence of a catalyst and a blowing agent.

**Description**

TECHNICAL FIELD

The present invention relates to a polymer-dispersed polyol using materials derived from a natural fat/oil, a process for producing a flexible polyurethane foam using the polymer-dispersed polyol, and a flexible polyurethane foam for an automobile interior material produced by the production process.

BACKGROUND ART

A flexible polyurethane foam is produced by reacting a polyol and a polyisocyanate compound in the presence of e.g. a catalyst and a blowing agent. As the polyol, e.g. a polyoxyalkylene polyol produced by subjecting an alkylene oxide such as ethylene oxide or propylene oxide to ring-opening addition polymerization to an initiator having an active hydrogen atom, or a polymer-dispersed polyol obtained by polymerizing a vinyl monomer in the presence of the polyoxyalkylene polyol, is used.
Many of materials of the polyol and the polymer-dispersed polyol are compounds derived from petroleum.
In recent years, in consideration of environment, there has been a demand to increase the proportion of a non-petroleum-derived material in a polyol (hereinafter referred to as the biomass degree).
The following Patent Document 1 discloses a flexible polyurethane foam produced by using a polymer-dispersed polyol obtained by polymerizing a vinyl monomer in the presence of aerated soybean oil produced by blowing air using soybean oil as a material.

PRIOR ART DOCUMENT

PATENT DOCUMENT

Patent Document 1: WO2009/001783

DISCLOSURE OF INVENTION

TECHNICAL PROBLEM

In production of a flexible polyurethane foam, even when a part of the conventional materials derived from petroleum are to be replaced by materials derived from a natural fat/oil, favorable molding cannot be conducted in some cases, or even if molding is possible, the physical properties of a foam are poor in some cases.
Further, if a polymer-dispersed polyol derived from a natural fat/oil is used as disclosed in Patent Document 1, as the viscosity of the polymer-dispersed polyol is high, the compatibility with a low viscosity polyisocyanate compound tends to be insufficient, and a reactive mixture obtained by mixing the polyol, the polyisocyanate compound and the like tends to be non-uniform. Further, when a mold is filled with the reactive mixture, the liquid flowability of the reactive mixture in the mold tends to be insufficient. If the reactive mixture is non-uniform, or the liquid flowability is poor, foaming in a mold tends to be non-uniform, and particularly molding in a complicated inside shape tends to be difficult.
Under these circumstances, it is an object of the present invention to provide a polymer-dispersed polyol using materials derived from a natural fat/oil, which has a low viscosity without lowering the biomass degree and without impairing the performance of a flexible polyurethane foam to be obtained, a process for producing a flexible polyurethane foam using it, and a flexible polyurethane foam produced by the production process.

SOLUTION TO PROBLEM

The present invention provides the following [1] to [14].

[1] A polymer-dispersed polyol (A1), comprising polymer particles dispersed in a matrix containing a polyol (a1) derived from a natural fat/oil and an epoxidized natural fat/oil (x).
[2] The polymer-dispersed polyol (A1) according to [1], wherein the content of the polymer particles is from 3 to 50 mass% based on 100 mass% of the polymer-dispersed polyol (A1).
[3] The polymer-dispersed polyol (A1) according to [1] or [2], wherein the content of the polyol (a1) derived from a natural fat/oil is from 5 to 80 mass%, and the content of the epoxidized natural fat/oil (x) is from 95 to 20 mass% based on 100 mass% of the matrix excluding the polymer particles in the polymer-dispersed polyol (A1).

[4] A process for producing a polymer-dispersed polyol (A1), which comprises polymerizing a vinyl monomer in a medium containing a polyol (a1) derived from a natural fat/oil and an epoxidized natural fat/oil (x).

[5] The process for producing a polymer-dispersed polyol (A1) according to [4], wherein the medium contains from 5 to 80 mass% of the polyol (a1) derived from a natural fat/oil and from 95 to 20 mass% of the epoxidized natural fat/oil (x) based on the total amount of the polyol (a1) derived from a natural fat/oil and the epoxidized natural fat/oil (x).

[6] A process for producing a polymer-dispersed polyol (A1), which comprises adding an epoxidized natural fat/oil (x) to a polymer-dispersed polyol obtainable by polymerizing a vinyl monomer in a medium containing a polyol (a1) derived from a natural fat/oil.

[7] The process for producing a polymer-dispersed polyol (A1) according to [6], wherein the addition amount of the epoxidized natural fat/oil (x) is from 20 to 95 mass% based on the total amount of the polyol (a1) derived from a natural fat/oil and the epoxidized natural fat/oil (x).

[8] A process for producing a polymer-dispersed polyol (A1), which comprises adding a polyol (a1) derived from a natural fat/oil to a polymer-dispersed polyol obtainable by polymerizing a vinyl monomer in a medium containing an epoxidized natural fat/oil (x).

[9] The process for producing a polymer-dispersed polyol (A1) according to [8], wherein the addition amount of the polyol (a1) derived from a natural fat/oil is from 5 to 80 mass% based on the total amount of the polyol (a1) derived from a natural fat/oil and the epoxidized natural fat/oil (x).

[10] A process for producing a flexible polyurethane foam, which comprises reacting a polyol (A) containing the polymer-dispersed polyol (A1) as defined in any one of [1] to [3], and a polyisocyanate compound (B), in the presence of a catalyst (C) and a blowing agent (D).

[11] The process for producing a flexible polyurethane foam according to [10], wherein the polyol (A) contains the following polyoxyalkylene polyol (A2):

polyoxyalkylene polyol (A2): a polyoxyalkylene polyol (A2) having an average of from 2 to 8 hydroxy groups and a hydroxy value of from 10 to 160 mgKOH/g.

[12] The process for producing a flexible polyurethane foam according to [11], wherein the ratio (A1)/(A2) of the polymer-dispersed polyol (A1) to the polyoxyalkylene polyol (A2) contained in the polyol (A) is from 10/90 to 90/10 (mass ratio).

[13] The process for producing a flexible polyurethane foam according to [11] or [12], wherein the polyoxyalkylene polyol (A2) contains a polyoxyalkylene polyol derived from petroleum.

[14] A flexible polyurethane foam for an automobile interior material, which is produced by the process as defined in any one of [10] to [13].

ADVANTAGEOUS EFFECTS OF INVENTION

The polymer-dispersed polyol of the present invention is a polymer-dispersed polyol employing materials derived from a natural fat/oil, which has a low viscosity without lowering the biomass degree and without impairing the performance of a flexible polyurethane foam to be obtained, whereby the uniformity and the liquid flowability of the reactive mixture will be good.

According to the process for producing a flexible polyurethane foam of the present invention, it is possible to produce a flexible polyurethane foam having good performance without lowering the biomass degree, by using a polymer-dispersed polyol employing materials derived from a natural fat/oil, which has a low viscosity and has good uniformity and liquid flowability when formed into a reactive mixture.

The flexible polyurethane foam obtainable by the production process of the present invention is suitable as automobile interior materials.

DESCRIPTION OF EMBODIMENTS

In the present invention, "the reactive mixture" is a liquid containing a mixture of a polyol and a polyisocyanate compound, and a blowing agent, a foam stabilizer, a catalyst and the like, and compounding ingredients as the case requires, in addition to the polyol and the polyisocyanate compound. "The reactive mixture" is formed into a polyurethane by reaction of the polyol with the polyisocyanate compound as components thereof.

In the present invention, "a polyol-containing mixture" is a component containing a polyol to produce "the reactive mixture" as the main component and is a mixture containing no polyisocyanate compound. "The polyol-containing mixture" is a liquid containing a blowing agent, a foam stabilizer, a catalyst and the like, and compounding ingredients as the case requires, in addition to the polyol. However, as some of the compounding ingredients in "the reactive mixture" are compounding ingredients which can be blended in the polyisocyanate compound, the compounding ingredients in "the reactive mixture" are not necessarily the same as the compounding ingredients in "the polyol-containing mixture".

In this specification, hydroxy values other the hydroxy value of the polymer-dispersed polyol are values obtained by the measurement method in accordance with JIS K1557 (2007 edition).

In this specification, the number average molecular weight (Mn), the weight average molecular weight (Mw) and the molecular weight distribution (Mw/Mn) are socalled molecular weights as calculated as polystyrene, determined by gel permeation chromatography using a polystyrene polymer as a reference.

The polymer-dispersed polyol (A1) of the present invention comprises polymer particles dispersed in a matrix containing a polyol (a1) derived from a natural fat/oil and an epoxidized natural fat/oil (x).

<Epoxidized natural fat/oil (x)>

The epoxidized natural fat/oil (x) is obtained by epoxidizing unsaturated double bonds of a natural fat/oil by having an oxidizing agent reacted therewith. The epoxidized natural fat/oil (x) contains substantially no hydroxy group.

The oxidizing agent may be a peroxide such as acetic peroxide. The method of epoxidizing the unsaturated double bonds by the oxidizing agent may be a known method.

As the natural fat/oil, one containing a fatty acid glycerate having unsaturated double bonds is used. The natural fat/oil may, for example, be linseed oil, safflower oil, soybean oil, tung oil, poppy oil, canola oil, sesame oil, rice oil, camellia oil, olive oil, tall oil, palm oil, cotton oil, corn oil, fish oil, beef tallow or lard.

The natural fat/oil has an iodine value of preferably from 50 to 200, more preferably from 100 to 150 by the measurement in accordance with JIS K 0070. A natural fat/oil having a high iodine value has a high content of unsaturated double bonds.

The natural fat/oil having an iodine value of at least 50 may, for example, be linseed oil, safflower oil, soybean oil, tung oil, poppy oil, canola oil, sesame oil, rice oil, camellia oil, olive oil, tall oil, cotton oil, corn oil, fish oil or lard.

The natural fat/oil having an iodine value of at least 100 may, for example, be linseed oil, safflower oil, soybean oil, tung oil, poppy oil, canola oil, sesame oil, rice oil, tall oil, cotton oil, corn oil or fish oil, and soybean oil is preferred since it is inexpensive.

The natural fat/oil to be used in the present invention is preferably soybean oil since it is inexpensive.

The epoxidized natural fat/oil (x) contained in the polymer-dispersed polyol (A1) may be used alone or in combination of two or more.

The epoxidized natural fat/oil (x) may also be available as a commercial product, and as a commercial product of the epoxidized soybean oil, ADK CIZER-O-130P manufactured by ADEKA CORPORATION, may, for example, be mentioned.

<Polyol (a1) derived from natural fat/oil>

The polyol (a1) derived from a natural fat/oil in the present invention is a polyol having hydroxy groups substantially imparted by a chemical reaction to a natural fat/oil having no hydroxy group.

The polyol (a1) derived from a natural fat/oil is preferably one obtained by blowing air or oxygen to a natural fat/oil to cause oxidative crosslinking between unsaturated bonds and at the same time, to have hydroxy groups provided, or one obtained by epoxidizing unsaturated double bonds of a natural fat/oil by having an oxidizing agent reacted therewith, followed by ring-opening in the presence of an active hydrogen compound to have hydroxy groups provided.

As a natural fat/oil as the material of the polyol (a1) derived from a natural fat/oil, a natural fat/oil other than a natural fat/oil having hydroxy groups is used. The natural fat/oil or a natural fat/oil component having hydroxy groups may, for example, be castor oil or phytosterol. Phytosterol is a plant sterol and is a natural fat/oil component having hydroxy groups. However, in the natural fat/oil as the material of the polyol (a1) derived from a natural fat/oil, a slight amount of a natural fat/oil or a natural fat/oil component having hydroxy groups may be contained. For example, a vegetable oil such as soybean oil or canola oil usually contains a very small amount of phytosterol, and a vegetable oil such as soybean oil or canola oil, containing such a very small amount of phytosterol may be used as the material of the polyol (a1) derived from a natural fat/oil.

The natural fat/oil is preferably a natural fat/oil containing a fatty acid glycerate having unsaturated double bonds. As its specific examples, the same natural fat/oil for the epoxidized natural fat/oil (x) may be mentioned. Among them, soybean oil is particularly preferred since it is inexpensive.

The polyol (a1) derived from a natural fat/oil has a hydroxy value of preferably from 20 to 250 mgKOH/g, particularly preferably from 30 to 200 mgKOH/g. The castor oil usually has a hydroxy value of from 155 to 177 mgKOH/g. A natural fat/oil except for castor oil and phytosterol has a hydroxy value of at most 10 mgKOH/g since it has substantially no hydroxy groups. By providing the natural fat/oil having no hydroxy groups with hydroxy groups by chemical reaction, it is possible to adjust the hydroxy value to from 20 to 250 mgKOH/g.

When the polyol (a1) derived from a natural fat/oil has a hydroxy value of at least 20 mgKOH/g, the crosslinking reactivity tends to be high, whereby sufficient foam physical properties can be obtained. When the polyol (a1) derived from a natural fat/oil has a hydroxy value of at most 250 mgKOH/g, the flexibility of a flexible polyurethane foam to be obtained tends to be good and the biomass degree tends to be high.

The polyol (a1) derived from a natural fat/oil has a molecular weight distribution of preferably at least 1.2. Castor oil and phytosterol have a molecular weight distribution of at most 1.1. However, if a natural fat/oil except for castor oil and phytosterol is provided with hydroxy groups by chemical reaction, the molecular weight distribution becomes at least 1.2, and making it smaller than that is difficult with current technologies.

The polyol (a1) derived from a natural fat/oil has a molecular weight distribution of preferably at most 20, particularly preferably at most 15, from the viewpoint of flowability of the polyol.

The molecular weight distribution is a ratio (Mw/Mn) of a weight average molecular weight (Mw) to a number average molecular weight (Mn).

The polyol (a1) derived from a natural fat/oil has a number average molecular weight (Mn) of preferably at least 800, more preferably at least 900, particularly preferably at least 1,000, from the viewpoint of the compatibility of the polyol or foam physical properties.

The polyol (a1) derived from a natural fat/oil has a number average molecular weight (Mn) of preferably at most 500,000, particularly preferably at most 100,000, from the viewpoint of flowability of the polyol.

A method for producing the polyol (a1) derived from a natural fat/oil may, for example, be the following methods (i) to (v), and the method (i) or (ii) is preferred from the viewpoint of the cost.

(i) A method wherein air or oxygen is blown in a natural fat/oil.
(ii) A method wherein after a natural fat/oil is epoxidized, the epoxy rings are ring-opened to have hydroxy groups provided.
(iii) A method wherein after unsaturated double bonds of a natural fat/oil are reacted with carbon monoxide and hydrogen in the presence of a special metal catalyst to form carbonyl, hydrogen is further reacted therewith to have primary hydroxy groups provided.
(iv) A method wherein after the method (i), the method (ii) or (iii) is carried out to provide remaining double bonds with hydroxy groups.
(v) A method wherein after the method (ii) or (iii), the method (i) is carried out to provide remaining double bonds with hydroxy groups.

Method (i):

This is a method wherein air or oxygen is blown in a natural fat/oil to cause oxidative crosslinking between unsaturated double bonds and at the same time, to have hydroxy groups provided. Further, a polyhydric alcohol may be introduced by a transesterification reaction.

In method (i), depending on the type of a natural oil/fat to be used as a material and the oxidation state during blowing, the molecular weight and the hydroxy value of the polyol (a1) derived from a natural fat/oil may be adjusted.

In a case where soybean oil is used as a material in method (i), the number average molecular weight (Mn) of the polyol (a1) derived from a natural fat/oil is usually at least 1,000, preferably from 1,200 to 500,000, particularly preferably from 1,500 to 100,000. When the number average molecular weight (Mn) of the polyol (a1) derived from a natural fat/oil is at least 1,500, oxidative crosslinking and hydroxy groups are sufficiently formed, and crosslinkability tends to be good. When the number average molecular weight (Mn) of the polyol (a1) derived from a natural fat/oil is at most 500,000, the flowability of the polyol tends to be good.

In a case where soybean oil is used as a material in method (i), the molecular weight distribution (Mw/Mn) of the polyol (a1) derived from a natural fat/oil is usually at least 2, preferably from 3 to 15.

The commercial products of the polyol (a1) derived from a natural fat/oil (aerated soybean oil) produced by method (i) using soybean oil as a material may, for example, be Soyol series manufactured by Urethane Soy Systems Company.

Method (ii):

This is a method wherein unsaturated double bonds of a natural fat/oil are epoxidized by having an oxidizing agent reacted therewith, followed by ring-opening in the presence of an active hydrogen compound to have hydroxy groups provided by using a cationic polymerization catalyst. As the oxidizing agent, a peroxide such as peracetic acid is used. As the compound having unsaturated double bonds of a natural fat/oil epoxidized by having an oxidizing agent reacted therewith, the above epoxidized natural fat/oil (x) may be used.

As the cationic polymerization catalyst, boron trifluoride diethyl etherate ($BF_3Et_2O$) may, for example, be mentioned.

As the active hydrogen compound, the following compounds may be mentioned.

Water, a monohydric alcohol, a polyhydric alcohol, a saccharide, a polyoxyalkylene monool, a polyoxyalkylene polyol, a polyester polyol, a polyetherester polyol, a monovalent carboxylic acid, a multivalent carboxylic acid, hydroxy carboxylic acid and/or its condensate, a primary amine, a secondary amine, hydroxy amine or alkanol amine may, for example, be mentioned. From the viewpoint of its low cost and easiness of handling, water and/or a monohydric alcohol are preferred, and water and/or methanol are particularly preferred.

The reaction to provide hydroxy groups by ring-opening the epoxidized soybean oil, can be carried out by a process wherein after the epoxidized soybean oil is dropwise added to a mixed solution of the cationic polymerization catalyst and the active hydrogen compound, the cationic polymerization catalyst is removed by an adsorption filtration.

In method (ii), it is possible to adjust the hydroxy value of the polyol (a1) derived from a natural fat/oil by the epoxy equivalent of an epoxidized natural fat/oil. It is possible to adjust the epoxy equivalent of an epoxidized natural fat/oil by e.g. the iodine value of a natural fat/oil used as a material, the amount of the oxidizing agent to the iodine value, reactivity, etc.

In method (ii), it is possible to adjust the molecular weight of the polyol (a1) derived from a natural fat/oil by the amount of the active hydrogen compound during providing hydroxy groups. If the amount of the active hydrogen compound is remarkably large, it is possible to make the molecular weight small, however, the reactivity tends to be bad and the cost tends to be high. Further, as soon as the molecular weight distribution becomes less than 1.2, drawbacks occur such that the molecular weight between crosslinking points is also decreased and the flexibility of the obtained flexible polyurethane foam is decreased. If the amount of the active hydrogen compound is too small, ring-opening addition polymerization reaction of the epoxidized natural fat/oil may proceed, whereby the molecular weight may rapidly be increased, and the molecules may be gelled.

In a case where epoxidized soybean oil is used as a material in method (ii), the number average molecular weight (Mn) of the polyol (a1) derived from a natural fat/oil is usually at least 800, preferably from 900 to 10,000.

In a case where epoxidized soybean oil is used as a material in method (ii), the molecular weight distribution (Mw/Mn) of the polyol (a1) derived from a natural fat/oil is usually at least 1.2, preferably from 1.2 to 5.

<Polymer particles>

The polymer particles dispersed in the polymer-dispersed polyol (A1) are preferably particles obtainable by polymerizing a vinyl monomer (M), and may be particles obtained by polymerizing a condensed monomer (N). In view of the moldability and the foam physical properties, particles obtainable by polymerizing a vinyl monomer (M) are preferred.

The particle size of the polymer particles is preferably from 0.01 to 10 $\mu$m, more preferably from 0.03 to 8 $\mu$m, particularly preferably from 0.05 to 5 $\mu$m. When it is at most the upper limit of the above range, stability of the polymer-dispersed polyol is sufficient, and when it is at least the lower limit of the above range, a flexible polyurethane foam to be obtained will moderately be defoamed, and favorable air flow will be obtained. The particle size of the polymer particles is measured by a Microtrac ultrafine particle size analyzer UPA-EX150 manufactured by NIKKISO CO., LTD.

[Vinyl monomer (M)]

The vinyl monomer (M) in the present invention may, for example, be acrylonitrile, styrene, a methacrylate such as an alkyl methacrylate or an acrylate such as an alkyl acrylate. The vinyl monomer may be used alone or in combination of two or more. The vinyl monomer is preferably a combination of acrylonitrile with styrene.

[Condensed monomer (N)]

The condensed polymer (N) in the present invention may, for example, be polyester, polyurea, polyurethane or melamine.

<Polymer-dispersed polyol (A1)>

The process for producing the polymer-dispersed polyol (A1) will be described hereinafter.

Based on 100 mass% of the polymer-dispersed polyol (A1), the content of the polymer particles is preferably at most 50 mass%, and the rest is the matrix. When the content of the polymer particles is at most 50 mass%, the viscosity of the polymer-dispersed polyol will be moderate, thus leading to excellent workability.

The content of the polymer particles is higher than 0 and the lower limit is not particularly limited, but is preferably at least 3 mass%, whereby a good effect by incorporating the polymer particles will be obtained. The content of the polymer particles is more preferably from 3 to 50 mass%, and within this range, it is more preferably from 3 to 40 mass%, particularly preferably from 3 to 30 mass%.

Based on 100 mass% of the matrix, the content of the polyol (a1) derived from a natural fat/oil is preferably from 5 to 80 mass%, particularly preferably from 15 to 60 mass%. The content of the epoxidized natural fat/oil (x) is preferably from 95 to 25 mass%, particularly preferably from 85 to 40 mass%.

When the content of the polyol (a1) derived from a natural fat/oil is at least the lower limit of the above range, the crosslinking reaction of the flexible polyurethane foam tends to be moderate. When it is at most the upper limit of the above range, the viscosity of the polymer-dispersed polyol to be obtained can be suppressed low. When the content of the epoxidized natural fat/oil (x) is at least the lower limit of the above range, the viscosity of the polymer-dispersed polyol to be obtained will be moderate. When it is at most the upper limit of the above range, the crosslinking reaction of the flexible polyurethane foam tends to be moderate.

The matrix may contain, in addition to the polyol (a1) derived from a natural fat/oil and the epoxidized natural fat/oil (x), a material (a2) derived from petroleum, within a range not to impair the effects of the present invention. The content is preferably at most 40 mass%, more preferably at most 20 mass% based on 100 mass% of the matrix, in view of the biomass degree. It is particularly preferred that the matrix comprises the polyol (a1) derived from a natural fat/oil and the epoxidized natural fat/oil (x).

The hydroxy value of the polymer-dispersed polyol (A1) is preferably from 10 to 200 mgKOH/g, particularly preferably from 15 to 150 mgKOH/g.

The hydroxy value of the polymer-dispersed polyol (A1) is calculated from a mass change as between before and after the polymerization of the monomer (M) employing the following formula (1).

$$\text{Hydroxy value} = (\text{hydroxy value of matrix}) \times (\text{mass of matrix charged}) / \{\text{mass of obtained polymer-dispersed polyol (A1)}\} \qquad (1)$$

<Process for producing polymer-dispersed polyol (A1)>

The polymer-dispersed polyol (A1) of the present invention is preferably produced by any of the following (I), (II) and (III).

(I) A method of polymerizing the vinyl monomer (M) in a medium containing the polyol (a1) derived from a natural fat/oil and the epoxidized natural fat/oil (x).

(II) A method of polymerizing the vinyl monomer (M) in a medium containing the polyol (a1) derived from a natural fat/oil, and adding the epoxidized natural fat/oil (x) to the obtained polymer-dispersed polyol.

(III) A method of polymerizing the vinyl monomer (M) in a medium containing the epoxidized natural fat/oil (x) and adding the polyol (a1) derived from a natural fat/oil to the obtained polymer dispersion.

In any method, a known means may be employed as the process for producing the polymer-dispersed polyol. Further, as the medium, a solvent inert to the polymerization of the vinyl monomer, which can be removed from the polymer system after the polymerization may be used. In the present invention, any method may be employed, and particularly the method (I) is preferred in view of easiness of production of the polymer-dispersed polyol.

[Method (I)]

The method (I) is preferably a method of polymerizing a vinyl monomer in a medium using a radical polymerization initiator. The medium is preferably a mixture of the polyol (a1) derived from a natural fat/oil and the epoxidized natural fat/oil (x) which is the same as the matrix of the polymer-dispersed polyol (A1).

The radical polymerization initiator may be a known radical polymerization initiator (for example, an azo compound or a peroxide). Further, in order to adjust the viscosity, a solvent may be used at the time of polymerization.

Further, in order to adjust the molecular weight of the polymer particles, a solvent having a chain transfer property may be used, and a commercially available chain transfer agent may be initially added all at once at the time of polymerization or may be continuously added simultaneously with addition of the vinyl monomer.

In general, the higher the polymer concentration at the time of polymerization, the more agglomeration of particles tends to occur in the procedure of growth of the polymer particles of the monomer (M), and the more the agglomerate tends to form. In order to prevent this, in the method (I), production of the polymer-dispersed polyol (A1) may be conducted in the presence of a solvent. The solvent is preferably a low boiling point solvent which can be removed by volatilization after the polymerization.

The solvent may, for example, be an alcohol such as methanol, ethanol, isopropanol, butanol, cyclohexanol or benzyl alcohol; an aliphatic hydrocarbon such as pentane, hexane, cyclohexane or hexene; an aromatic hydrocarbon such as benzene, toluene or xylene; a ketone such as acetone, methyl ethyl ketone or acetophenone; an ester such as ethyl acetate or butyl acetate; an ether such as isopropyl ether, tetrahydrofuran, benzyl ethyl ether, acetal, anisol or methyl-tert-butyl ether; a halogenated hydrocarbon such as chlorobenzene, chloroform, dichloroethane or 1,1,2-trichlorotrifluoroethane; a nitro compound such as nitrobenzene; a nitrile such as acetonitrile or benzonitrile; an amine such as trimethylamine, triethylamine, tributylamine or dimethylaniline; an amide such as N,N'-dimethylformamide or N-methylpyrrolidone; or a sulfur compound such as dimethylsulfoxide or sulfolane.

These solvents may be used alone or as mixed. After completion of the polymerization of the vinyl monomer (M), the solvent is removed. Removal of the solvent is carried out usually by heating under reduced pressure. It may also be carried out by heating under normal pressure or at room temperature under reduced pressure. At this time, an unreacted monomer is also removed together with the solvent.

[Methods (II) and (III)]

In the above method (II), it is preferred to use, as the medium, only the polyol (a1) derived from a natural fat/oil, or the polyol (a1) derived from a natural fat/oil and the solvent. In the method (II), the medium does not contain the epoxidized natural fat/oil (x). After the vinyl monomer is polymerized, the epoxidized natural fat/oil (x) is added to the obtained polymer-dispersed polyol having the polymer particles dispersed in the polyol (a1) derived from a natural fat/oil, to obtain the above polymer-dispersed polyol (A1). The addition amount of the epoxidized natural fat/oil (x) is such an amount that the ratio of the polyol (a1) derived from a natural fat/oil and the epoxidized natural fat/oil (x) is the same as that of the matrix of the above polymer dispersed polyol (A1).

In the above method (III), it is preferred to use, as the medium, only the epoxidized natural fat/oil (x), or the epoxidized natural fat/oil (x) and the solvent. In the method (III), the medium does not contain the polyol (a1) derived from a natural fat/oil. After the vinyl monomer is polymerized, the polyol (a1) derived from a natural fat/oil is added to the obtained polymer dispersion having the polymer particles dispersed in the epoxidized natural fat/oil (x), to obtain the above polymer-dispersed polyol (A1). The addition amount of the polyol (a1) derived from a natural fat/oil is such an amount that the ratio of the polyol (a1) derived from a natural fat/oil and the epoxidized natural fat/oil (x) is the same as that of the matrix of the above polymer-dispersed polyol (A1).

In the method (II) or (III), the method of polymerization of the vinyl monomer, the use of the solvent and the type of the solvent, and the like are the same as in the above method (I).

<Process for producing flexible polyurethane foam>

The process for producing a flexible polyurethane foam of the present invention is a process of reacting a polyol (A) and a polyisocyanate compound (B) in the presence of a catalyst (C) and a blowing agent (D) to obtain a flexible polyurethane foam.

[Polyol (A)]

The polyol (A) contains the polymer-dispersed polyol (A1). It preferably contains a polyoxyalkylene polyol (A2) in addition to the polymer-dispersed polyol (A1). The polyoxyalkylene polyol (A2) preferably contains a polyoxyalkylene polyol derived from petroleum, and it is more preferred that the entire amount of the polyoxyalkylene polyol (A2) is a polyoxyalkylene polyol derived from petroleum.

The polyoxyalkylene polyol derived from petroleum means a polyoxyalkylene polyol produced by using a compound derived from petroleum as a material. The compound derived from petroleum means compounds (including the same compound prepared synthetically) present in petroleum and oil mill gas and derivatives of the compounds.

[Polyoxyalkylene polyol (A2)]

The polyoxyalkylene polyol (A2) is a polyoxyalkylene polyol having an average of from 2 to 8 hydroxy groups and a hydroxy value of from 5 to 160 mgKOH/g.

When the polyoxyalkylene polyol (A2) has an average of at least 2 hydroxy groups, the durability and the riding comfort of the flexible polyurethane foam when used for automobile seats tend to be good. When the polyoxyalkylene polyol (A2) has an average of at least 8 hydroxy groups, the flexible polyurethane foam becomes not so rigid, whereby the foam physical properties such as elongation tend to be good.

The average number of hydroxy groups means the average number of active hydrogen atoms of an initiator.

When the polyoxyalkylene polyol (A2) has a hydroxy value of at least 5 mgKOH/g, the viscosity will not be so high, whereby the workability tends to be good. When the polyoxyalkylene polyol (A2) has a hydroxy value of at most 160 mgKOH/g, the flexible polyurethane foam will not be so rigid, whereby the foam physical properties such as elongation tend to be good.

The number average molecular weight (Mn) of the polyoxyalkylene polyol (A2) is preferably from 700 to 45,000, more preferably from 1,500 to 20,000, particularly preferably from 2,000 to 15,000.

The polyoxyalkylene polyol (A2) can be obtained by subjecting an alkylene oxide to ring-opening addition polymerization to an initiator in the presence of a polymerization catalyst.

The polymerization catalyst may, for example, be an alkali metal compound catalyst (for example, a sodium type catalyst, a potassium type catalyst or a cesium type catalyst), a coordination anionic polymerization catalyst (for example, a double metal cyanide complex catalyst), a cationic polymerization catalyst, or a phosphazenium compound. An alkali metal compound catalyst is preferred in view of availability of the catalyst at a low cost, and a double metal cyanide complex catalyst is preferred with a view to obtaining a polyol with little by-products.

The sodium or potassium type catalyst may, for example, be sodium metal, potassium metal, a sodium or potassium alkoxide (such as sodium methoxide, sodium ethoxide, sodium propoxide, potassium methoxide, potassium ethoxide or potassium propoxide), sodium hydroxide, potassium hydroxide, sodium carbonate or potassium carbonate.

The cesium type catalyst may, for example, be cesium metal, a cesium alkoxide (such as cesium methoxide, cesium ethoxide or cesium propoxide), cesium hydroxide or cesium carbonate.

The coordination anionic polymerization catalyst may be a known coordination anionic polymerization catalyst, and is preferably a double metal cyanide complex catalyst having an organic ligand (hereinafter a double metal cyanide complex catalyst having an organic ligand may sometimes be referred to as a DMC catalyst). The organic ligand may be tert-butyl alcohol, n-butyl alcohol, iso-butyl alcohol, tert-pentyl alcohol, iso-pentyl alcohol, N,N-dimethylacetamide, ethylene glycol mono-tert-butyl ether, ethylene glycol dimethyl ether (also called glyme), diethylene glycol dimethyl ether (also called diglyme), triethylene glycol dimethyl ether (triglyme), iso-propyl alcohol or dioxane. Dioxane may be 1,4-dioxane or 1,3-dioxane but is preferably 1,4-dioxane. The organic ligands may be used alone or in combination of two or more.

Among them, the catalyst preferably has tert-butyl alcohol as the organic ligand. Accordingly, it is preferred to use a double metal cyanide complex catalyst having tert-butyl alcohol as at least part of the organic ligand. With the double metal cyanide complex catalyst having such an organic ligand, which has high activity, a polyol with a low total degree of unsaturation can be produced.

The cationic polymerization catalyst is preferably $MoO_2$(diketonate)Cl, $MoO_2$(diketonate)$OSO_2CF_3$, trifluoromethanesulfonic acid, boron trifluoride, a boron trifluoride-coordinated compound (such as boron trifluoride diethyl etherate, boron trifluoride dibutyl etherate, boron trifluoride dioxanate, boron trifluoride acetic anhydrate or a boron trifluoride triethylamine complex compound), an aluminum or boron compound having at least one aromatic hydrocarbon group containing elemental fluorine or aromatic hydrocarbon oxy group containing elemental fluorine.

The aromatic hydrocarbon group containing elemental fluorine may, for example, be pentafluorophenyl, tetrafluorophenyl, trifluorophenyl, 3,5-bis(trifluoromethyl)trifluorophenyl, 3,5-bis(trifluoromethyl)phenyl, β-perfluoronaphthyl or 2,2',2"-perfluorobiphenyl.

The aromatic hydrocarbon oxy group containing elemental fluorine is preferably a hydrocarbon oxy group having elemental oxygen bonded to the above aromatic hydrocarbon group containing elemental fluorine.

The number of functional groups of the initiator to obtain the polyoxyalkylene polyol (A2) is preferably from 2 to 8, more preferably from 3 to 6. When it is at least the lower limit of the above range, the durability of a flexible polyurethane foam will be sufficient, and when it is at most the upper limit of the above range, both durability and elongation of a flexible polyurethane foam to be obtained can be achieved.

The initiator to obtain the polyoxyalkylene polyol (A2) of the present invention may, for example, be ethylene glycol, diethylene glycol, propylene glycol, dipropylene glycol, neopentyl glycol, 1,4-butanediol, 1,6-hexanediol, glycerin, trimethylolpropane, pentaerythritol, diglycerin, dextrose, sucrose, bisphenol A, ethylenediamine or a low molecular weight polyoxyalkylene polyol obtained by adding an alkylene oxide thereto.

Further, the initiator may be the above polyol (a1) derived from a natural fat/oil.

The alkylene oxide is preferably at least one member selected from the group consisting of ethylene oxide, propylene oxide, 1,2-butylene oxide, 2,3-butylene oxide or styrene oxide, and is preferably at least one member selected from the group consisting of ethylene oxide, propylene oxide and butylene oxide. When two or more alkylene oxides are used in combination, it is preferred to use propylene oxide and ethylene oxide in combination, and either polymerization method of block polymerization and random polymerization may be employed. Further, both block polymerization and random polymerization may be combined for production. In the case of block polymerization, the order of ring-opening addition polymerization of the alkylene oxides is preferably such that propylene oxide and ethylene oxide are added in this order, or ethylene oxide is added first, and propylene oxide and ethylene oxide are added in this order. By the ring-opening addition polymerization in this order, many of hydroxy groups at molecular terminals (hereinafter sometimes referred to as terminal hydroxy groups) of the polyoxyalkylene polyol (A2) are primary hydroxy groups, and the reactivity of the polyol (A) and the polyisocyanate compound (B) tends to be high. As a result, moldability of a flexible polyurethane foam to be obtained tends to be good. The terminal is preferably ethylene oxide.

When ethylene oxide is used, the proportion of ethylene oxide in the alkylene oxides (100 mass%) is preferably at most 30 mass%, particularly preferably at most 25 mass%. When the proportion of ethylene oxide is at most the above upper limit mass%, the reactivity of the polyol (A) with the polyisocyanate compound (B) tends to be moderate, and the moldability of a flexible polyurethane foam tends to be good.

[Process for producing polyoxyalkylene polyol (A2)]

It is preferred to use, as the polyoxyalkylene polyol (A2), a polyoxyalkylene polyol obtainable by subjecting an alkylene oxide to ring-opening addition polymerization to an initiator in the presence of a DMC catalyst. The production process using a DMC catalyst is preferably a production process comprising the following step (a) and step (b) in this order. The following step (a) is a step of activating the DMC catalyst, and the step (b) is a step of subjecting an alkylene oxide to ring-opening addition polymerization. However, it is considered that the alkylene oxide undergoes ring-opening addition polymerization in the step (a) also. This production process using the DMC catalyst is preferably conducted by batch system.

<Step (a)>

First, to a pressure resistant reactor equipped with a stirring means and a temperature controlling means, the entire amount of the initiator and the entire amount of the DMC catalyst are put and mixed to prepare a reaction liquid. Usually, the initiator is a viscous liquid, and the DMC catalyst is in the form of particles or a slurry containing the particles. The reaction liquid may contain a polymerization solvent as the case requires. Further, the reaction liquid may contain the component added as the case requires in the DMC catalyst preparation step.

The polymerization solvent may be hexane, cyclohexane, benzene or ethyl methyl ketone. In a case where no polymerization solvent is used, the solvent removal step from the final product is unnecessary, thus increasing the productivity. Further, the catalytic activity of the DMC catalyst is decreased in some cases by the influence of the moisture or the antioxidant contained in the polymerization solvent, and such inconvenience can be prevented by not using a polymerization solvent.

In this process, "mixing" of the initiator and the DMC catalyst means a state where both are uniformly mixed as a whole, and in the step (a), it is required that they are in such a "mixed" state.

In the step (a) of this process, the mixing means is not particularly limited so long as the DMC catalyst and the initiator (including components added as the case requires) can be sufficiently mixed. The mixing means is usually stirring means. The stirring power of the stirring means is preferably from 4 to 500 kW/m$^3$, more preferably from 8 to 500 kW/m$^3$, particularly preferably from 12 to 500 kW/m$^3$. Here, the stirring power is a value calculated from a known value, and this value is a power requirement per unit liquid amount of the content, calculated from the volume and the viscosity of the content in the pressure resistant reactor, the shape of the reactor, the shape and the number of revolutions of the stirring vanes, etc. In this process, the above reaction liquid corresponds to the content in the pressure resistant reactor.

As stirring means in the step (a) in the production process of this process, specifically, stirring by stirring vanes, by bubbling by inert gas such as nitrogen gas, by electromagnetic waves or ultrasonic waves, or the like may be mentioned, and stirring by the stirring vanes is preferred. As a preferred example of the stirring vanes, the stirring vanes disclosed in JP-A-2003-342361 may be mentioned. The stirring vanes are particularly preferably large-scaled vanes, and the large-scaled vanes such as FULLZONE (registered trademark) vanes manufactured by Shinko Pantec Co., Ltd., or MAXBLEND (registered trademark) vanes manufactured by Sumitomo Heavy Industries, Ltd. may be mentioned. Further, paddle vanes, pitched paddle vanes, turbine vanes and propeller vanes may, for example, be used, and at that time, the radius of the stirring vanes is in a range of preferably from 20 to 99%, more preferably from 30 to 90%, particularly preferably from 40 to 80% to the inner radius (the radius of the inside) of the pressure resistant reactor. The larger the radius of the stirring vane becomes, the larger the shearing stress becomes, and therefore the chance of contact of the viscous liquid (initiator) and the particles (the DMC catalyst) will be increased. Accordingly, the step (a) in this process is carried out preferably in a pressure resistant reactor equipped with stirring means having a large radius of stirring vanes.

The shape and the material of the pressure resistant reactor to be used in the step (a) of this process are not particularly limited, however, as the material, a container made of heat resistant glass or a metal is preferred.

Then, preferably, the interior in the pressure resistant reactor is replaced with nitrogen, whereby oxygen in the reaction liquid is removed. The amount of oxygen in the reaction liquid is preferably at most 1 mass% based on the amount of nitrogen.

In the step (a) of this process, the pressure in the pressure resistant reactor is preferably at most 0.020 MPa by the absolute pressure. It is more preferably at most 0.015 MPa by the absolute pressure, particularly preferably at most 0.010 MPa by the absolute pressure. If it exceeds 0.020 MPa by the absolute pressure, a pressure increase along with a decrease in the space volume in the pressure resistant reactor along with the addition polymerization tends to be intense. Further, evacuation of the pressure resistant reactor does not lead to an effect of improving the activity of the catalyst, but may be carried out if necessary in the process if the moisture content in the initiator is too high.

Then, the reaction liquid is heated with stirring, and then in a state where the temperature of the reaction liquid is at the predetermined initial temperature, the alkylene oxide is supplied and reacted. In this specification, the initiator temperature means a temperature of the reaction liquid when supply of the alkylene oxide is started in the step (a).

The initial temperature of the reaction liquid is preferably from 120 to 165˚C, more preferably from 125 to 150˚C, particularly preferably from 130 to 140˚C. When it is at least the lower limit of the above range, the catalytic activity will be remarkably good, and when it is at most the upper limit of the above range, thermal decomposition of components themselves contained in the reaction liquid will not occur.

Specifically, it is preferred that the reaction liquid is heated to the initial temperature with stirring, and supply of the alkylene oxide is started in a state where the temperature of the reaction liquid is maintained. For example, heating is stopped when the reaction liquid reaches the predetermined initial temperature, and supply of the alkylene oxide is started before the temperature of the reaction liquid starts decreasing. The time after heating is stopped until supply of the alkylene oxide is started is not particularly limited but is preferably within one hour in view of the efficiency.

The heating time to heat the reaction liquid to the predetermined temperature is preferably from 10 minutes to 24 hours, particularly preferably from 15 minutes to 2 hours. When it is at least the lower limit of the above range, the reaction liquid can uniformly be heated, and when it is at most the upper limit of the above range, such is efficient in view of time.

The alkylene oxide in the step (a) is considered to undergo ring-opening addition polymerization to the initiator and to activate the DMC catalyst in addition.

In the step (a), if the amount of supply of the alkylene oxide is too small, the initial reaction hardly occurs, and if it is too large, runaway reaction may occur. Thus, it is preferably from 5 to 20 parts by mass per 100 parts by mass of the initiator contained in the reaction liquid. It is more preferably from 8 to 15 parts by mass, particularly preferably from 10 to 12 parts by mass.

Supply of the alkylene oxide is carried out in a state where the pressure resistant reactor is sealed. When the alkylene oxide is supplied to the reaction liquid, immediately after the supply, the internal pressure of the pressure resistant reactor will be increased along with vaporization of the unreacted alkylene oxide. Then, once the DMC catalyst is activated, a reaction of the alkylene oxide with the initiator occurs, and simultaneously with the start of the decrease in the internal pressure of the pressure resistant reactor, the temperature of the reaction liquid is increased by the heat of reaction. After completion of the reaction of the entire amount of the alkylene oxide supplied, the internal pressure of the pressure resistant reactor is decreased to the same level as before the supply, and an increase in the temperature of the reaction liquid by the heat of reaction no more occurs.

In this specification, the step (a) is a step from initiation of the supply of the alkylene oxide to completion of the reaction of the alkylene oxide. Completion of the reaction of the alkylene oxide can be confirmed by a decrease in the internal pressure of the pressure resistant reactor. That is, completion of the step (a) is at a time where the internal pressure of the pressure resistant reactor is decreased to the same level as before supply of the alkylene oxide. The time of the step (a) is preferably from 10 minutes to 24 hours, particularly preferably from 15 minutes to 3 hours. When it is at least the lower limit of the above range, the DMC catalyst can be activated, and when it is at most the upper limit of the above range, such is efficient in view of time.

In this process, the maximum temperature of the reaction liquid in the step (a) is preferably higher by from 15˚C to 50˚C than the initial temperature of the reaction liquid. The maximum temperature is more preferably higher by at least 20˚C, particularly preferably higher by at least 25˚C, than the initial temperature. Since the heat release by the reaction of the alkylene oxide with the initiator is large, usually the temperature of the reaction liquid is increased to the maximum temperature which is higher by at least 15˚C than the initial temperature even without heating, and thereafter, the temperature is gradually decreased even without cooling. The larger the amount of the alkylene oxide, the larger the temperature increase of the reaction liquid by the heat of reaction. Cooling of the reaction liquid may be conducted as the case requires, for example, when the temperature is too increased. After the reaction liquid reaches the maximum temperature, the reaction liquid is preferably cooled so as to shorten the time required for the temperature decrease.

Cooling may be carried out, for example, by a method of providing a cooling pipe through which a coolant flows in the reaction liquid to carry out heat exchange. In such a case, the temperature of the reaction liquid can be controlled by the temperature of the coolant, the coolant flow rate, and the timing of flow of the coolant.

By increasing the temperature of the reaction liquid to a temperature higher by at least 15˚C than the initial temperature, the molecular weight distribution of a polyoxyalkylene polyol (A2) to be finally obtained can be made narrower. A maximum temperature of the reaction liquid higher by more than 50˚C than the initial temperature is unfavorable in view of the pressure resistant structure of the reactor.

The maximum temperature is preferably from 135 to 180˚C, more preferably from 145 to 180˚C, particularly preferably from 150 to 180˚C.

It is preferred that the temperature of the reaction liquid in the step (a) is kept to be a temperature of at least the initial temperature after it is increased along with the reaction of the alkylene oxide with the initiator and reaches the maximum temperature until the reaction of the alkylene oxide is completed, more preferably, it is kept to a temperature higher by at least 15˚C than the initial temperature.

<step (b)>

It is a step of subjecting an alkylene oxide to ring-opening addition polymerization with stirring by adjusting the temperature of the reaction liquid to a predetermined polymerization temperature while the alkylene oxide is newly supplied. The alkylene oxide is further subjected to ring-opening addition polymerization to the intermediate product obtained by reacting the alkylene oxide to the initiator in the step (a), to obtain the polyoxyalkylene polyol (A2). Further, after completion of the step (b), ethylene oxide may further be reacted with the obtained polyoxyalkylene polyol in the presence of an alkali metal catalyst to obtain a polyoxyalkylene polyol (A2) having a high proportion of terminal hydroxy groups being primary hydroxy groups. However, the step (b) in this specification is a step of subjecting an alkylene oxide to ring-opening addition polymerization in the presence of the DMC catalyst.

As the pressure resistant reactor used in the step (b), a pressure resistant autoclave container is preferably used, but in a case where the boiling point of the alkylene oxide is high, it may not be pressure resistant. The material is not particularly limited. Further, as the reactor, the container used in the above step (a) may be used as it is.

In the step (b) in this process, at the time of the reaction of the initiator with the alkylene oxide in the presence of the DMC catalyst, the reaction liquid is stirred by means of a stirring power of preferably from 4 to 500 kW/m$^3$, more preferably from 8 to 500 kW/m$^3$, particularly preferably from 12 to 500 kW/m$^3$, in the same manner as the above (a) DMC catalyst pretreatment step. As the stirring vanes, propeller vanes, paddle vanes, MAXBLEND vanes or disk turbine vanes may be used, and large-scaled vanes are preferred to uniformly mix the content in the reactor. Further, a disper, a homomixer, a colloid mill, a Nauta mixer or the like used for emulsification or dispersion may also be used. Further, mixing by ultrasonic waves may be employed without using the stirring vanes. Such stirring methods may be combined. In a case where a common stirring method of using the stirring vanes is employed, the speed of revolution of the stirring vanes is preferably as high as possible within a range where a large amount of gas of the vapor phase in the reactor is not included in the reaction liquid so that the stirring efficiency is not decreased.

In the step (b) of this process, the addition polymerization reaction method is preferably a batch method, however, a continuous method may also be employed wherein addition of the alkylene oxide and the reaction liquid containing the DMC catalyst after the above step (a) and withdrawal of the polyoxyalkylene polyol (A2) as the product are carried out simultaneously. Particularly when an initiator having an average molecular weight per one hydroxy group of at most 300 is used, the continuation method is preferred.

When the alkylene oxide is supplied in the step (b), immediately after the supply, the internal pressure of the pressure resistant reactor is increased along with vaporization of the unreacted alkylene oxide. Then, the reaction of the alkylene oxide with the product having a hydroxy group in the step (a) occurs, and simultaneously with the start of a decrease in the internal pressure of the pressure resistant reactor, heat of reaction is generated. After completion of the reaction of the entire amount of the alkylene oxide additionally supplied, the internal pressure of the pressure resistant reactor is decreased to the same level as before the additional supply.

The completion of the reaction of the alkylene oxide supplied in the step (b) can be confirmed by a decrease in the internal pressure of the pressure resistant reactor.

The temperature (polymerization temperature) of the reaction liquid when the supplied alkylene oxide is reacted in the step (b) is preferably from 125 to 180˚C, particularly preferably from 125 to 160˚C. When the polymerization temperature is at least 125˚C, a favorable reaction rate will be obtained, and the amount of remaining unreacted product in the final product can be reduced. Further, when the polymerization temperature is at most 180˚C, high activity of the DMC catalyst can favorably be maintained, and the molecular weight distribution can be made narrow.

After completion of the reaction of the alkylene oxide supplied additionally, it is preferred that the reaction liquid is cooled and purification of the reaction product is carried out.

The supply rate of the alkylene oxide supplied in the step (b) is as low as possible, whereby the molecular weight distribution of a polymer to be obtained can be made narrow, however, such lowers the production efficiency, and accordingly the supply rate is preferably set balancing them. A specific supply rate is preferably from 1 to 200 mass%/hr to the entire mass of the assumed intermediate. Further, the supply rate may successively be changed during the polymerization reaction.

The reaction time in the step (b) of this process is preferably from 10 minutes to 40 hours, particularly preferably from 30 minutes to 24 hours. The reaction time of at most the upper limit of the above range is preferred in view of the efficiency. When it is at least the lower limit of the above range, the reaction can be controlled.

The pressure of the pressure resistant reactor in the step (b) of this process is preferably at most 1 MPa by the absolute pressure, particularly preferably 0.8 MPa, in view of easiness of the operation and the equipment.

Further, a product obtained by subjecting an alkylene oxide to ring-opening addition polymerization to the polyether polyol obtained by ring-opening addition polymerization using the DMC catalyst, by using a polymerization catalyst other than the DMC catalyst, may be used as the final polyoxyalkylene polyol (A2). The alkylene oxide to be used for the ring-opening addition polymerization is preferably ethylene oxide so that the hydroxy groups of the polyether polyol are primary hydroxy groups. The polymerization catalyst to subject ethylene oxide to ring-opening addition polymerization is preferably an alkali metal catalyst, for example, an alkyl metal hydroxide such as potassium hydroxide or sodium hydroxide, an alkali metal carbonate such as potassium carbonate, or an alkali metal alkoxide.

Further, the polyoxyalkylene polyol (A2) obtained by this process may be subjected to removal or deactivation of the DMC catalyst or the alkali metal catalyst as the case requires. The method may, for example, be an adsorption method using an adsorbent selected from synthetic silicate (such as magnesium silicate or aluminum silicate), an ion exchange resin, activated white earth and the like, a neutralization method by an amine, an alkali metal hydroxide, phosphoric acid, an organic acid or its salt such as lactic acid, succinic acid, adipic acid or acetic acid, or an inorganic acid such as sulfuric acid, nitric acid or hydrochloric acid, or a combination of the neutralization method and the adsorption method.

To the polyoxyalkylene polyol (A2) thus obtained, a stabilizer may be added as the case requires to prevent deterioration during long term storage.

The stabilizer may be a hindered phenol type antioxidant such as BHT (dibutylhydroxytoluene).

In this process, by carrying out the step (a) at a specific temperature, the molecular weight distribution (Mw/Mn) of the polyoxyalkylene polyol (A2) to be obtained can be made narrower. The reduction in the molecular weight distribution (Mw/Mn) contributes to a decrease in the viscosity of the polyoxyalkylene polyol (A2).

Particularly the polyoxyalkylene polyol (A2) having a low hydroxy value and a high molecular weight has a larger amount of a high molecular weight product having a number average molecular weight of at least 100,000 as the molecular weight distribution becomes wider, and thereby has a remarkably high viscosity, and accordingly the effect of lowering the viscosity is likely to be obtained by making the molecular weight distribution narrow.

For example, according to this process, a high molecular weight polyoxyalkylene polyol (A2) having a hydroxy value of from 10 to 160 mgKOH/g and a molecular weight distribution (Mw/Mn) of from 1.010 to 1.100 can be produced. The hydroxy value is particularly preferably from 10 to 30 mgKOH/g. The molecular weight distribution (Mw/Mn) is particularly preferably from 1.020 to 1.080. The number average molecular weight of the polyoxyalkylene polyol (A2) is preferably from 7,000 to 20,000, particularly preferably from 7,500 to 18,000.

The reason why a polyoxyalkylene polyol (A2) having a narrow molecular weight distribution can be obtained by this process is not clearly understood but is estimated as follows. The DMC catalyst can be obtained only as an agglomerate with no catalytic activity when prepared. Thus, for the ring-opening addition polymerization using the DMC catalyst, activation of the catalyst is considered to be essential. By activation of the catalyst, the agglomerate is pulverized, whereby the surface area of the DMC catalyst is increased and the catalytic activity develops. At this activation, by activating the catalyst under conditions where a maximum temperature higher than the initial temperature is achieved by using the initiator, the DMC catalyst and the alkylene oxide, pulverization of the DMC catalyst agglomerate is more efficiently carried out, and the catalytic activity will be more improved. As a means of such catalyst activation, the above step (a) is effective. Further, the DMC catalyst activated in the step (a) favorably maintains the high activity until completion of the ring-opening addition polymerization of the alkylene oxide in the following step (b), whereby a large amount of a polymer having a uniform molecular weight is formed.

In the present invention, the polyoxyalkylene polyol (A2) is particularly preferably a polyoxyalkylene polyol obtainable by subjecting propylene oxide to ring-opening addition polymerization to the initiator in the presence of the DMC catalyst, and then subjecting ethylene oxide to ring-opening addition polymerization in the presence of a polymerization catalyst comprising a hydroxide of an alkali metal. In this case, the initiator is preferably a compound having propylene oxide added to glycerin to a number average molecular weight (Mn) of 1,500 by using a potassium hydroxide catalyst. Further, the content of oxyethylene groups in the entire polyoxyalkylene polyol is preferably from 5 to 30 mass%, particularly preferably from 10 to 20 mass%. The hydroxy value is preferably from 10 to 160 mgKOH/g, particularly preferably from 10 to 30 mgKOH/g.

The number average molecular weight (Mn) is preferably from 3,000 to 20,000, more preferably from 4,500 to 18,000.

The polyoxyalkylene polyol (A2) may be used alone or in combination of two or more. When two or more types of polyoxyalkylene polyols (A2) are used, the average number of the hydroxy groups, the hydroxy value and the number average molecular weight (Mn) of each polyoxyalkylene polyol (A2) is preferably in the above preferred range.

The ratio (A1)/(A2) of the polymer-dispersed polyol (A1) to the polyoxyalkylene polyol (A2) contained in the polyol (A) is preferably in a range of from 10/90 to 90/10 (mass ratio), particularly preferably from 15/85 to 80/20 (mass ratio). When the proportion of the polyoxyalkylene polyol (A2) is at least 10 mass%, the moldability of a flexible polyurethane foam is improved. When the proportion of the polyoxyalkylene polyol (A2) is at most 90 mass%, that is, when the proportion of the polymer-dispersed polyol (A1) is at least 10 mass%, polyols derived from petroleum are decreased, whereby influence over the environment is suppressed.

[Another polyol]

The polyol (A) may contain another polyol other than the polymer-dispersed polyol (A1) and the polyoxyalkylene polyol (A2).

Such another polyol may, for example, be the polyol (a1) derived from a natural fat/oil, another polymer-dispersed polyol (A3), a polyester polyol, or a polycarbonate polyol.

The polyol (a1) derived from a natural fat/oil is the above mentioned polyol (a1) derived from a natural fat/oil, having no polymer particles.

[Another polymer-dispersed polyol (A3)]

The polymer-dispersed polyol (A3) is a polymer-dispersed polyol having the polyoxyalkylene polyol (A2) as a matrix. By dispersing polymer particles in the matrix, the hardness, air flow and other physical properties of the flexible polyurethane foam can be improved.

The polymer of the polymer particles may be an addition polymerization type polymer or a condensation polymerization type polymer. An addition polymerization type polymer is preferred with a view to achieving both moldability and physical properties.

The addition polymerization type polymer may, for example, be a homopolymer or copolymer of a vinyl monomer (for example, acrylonitrile, styrene, a methacrylate or an acrylate).

The condensation polymerization type polymer may, for example, be polyester, polyurea, polyurethane or melamine.

[Polyester polyol]

The polyester polyol as another polyol contained in the polyol (A) may be a polyester polyol obtainable by condensing a low-molecular-weight polyol and a carboxylic acid, or a lactone polyol.

The low-molecular-weight polyol may, for example, be a $C_{2-10}$ dihydric alcohol (such as ethylene glycol or propylene glycol), a $C_{2-10}$ trihydric alcohol (such as glycerin, trimethylolpropane or trimethylolethane), a tetrahydric alcohol (such as pentaerythritol or diglycerin), or a saccharide (such as sorbitol or sucrose).

The carboxylic acid may, for example, be a $C_{2-10}$ dicarboxylic acid (such as succinic acid, adipic acid, maleic acid, fumaric acid, phthalic acid or isophthalic acid) or a $C_{2-10}$ acid anhydride (such as succinic anhydride, maleic anhydride or phthalic anhydride).

The lactone polyol may, for example, be an ε-caprolactone ring-opening polymerized product or β-methyl-δ-valerolactone ring-opening polymerized product.

[Polycarbonate polyol]

The polycarbonate polyol as another polyol contained in the polyol (A) may be one obtained by a dehydrochlorination reaction of the low-molecular-weight polyol with phosgene, or by a transesterification reaction of the low-molecular-weight polyol with diethylene carbonate, dimethyl carbonate, diphenyl carbonate or the like.

In a case where the polyol (A) contains another polyol, its content is preferably at most 40 mass% in the polyol (A) (100 mass%). When the proportion of another polyol is at most 40 mass%, the moldability of the flexible polyurethane foam can be satisfied while maintaining a high biomass degree, even when the polyol is a polyol derived from petroleum.

[ANOTHER HIGH-MOLECULAR-WEIGHT ACTIVE HYDROGEN COMPOUND]

As a compound to be reacted with the polyisocyanate compound (B), it is possible to use the polyol (A) and another high-molecular-weight active hydrogen compound in combination.

Such another high-molecular-weight active hydrogen compound may, for example, be a high-molecular-weight polyamine having at least 2 primary amino groups or secondary amino groups; a high-molecular-weight compound having at least one primary amino group or secondary amino group and at least one hydroxy group; or a piperazine polyol.

The high-molecular-weight polyamine or the high-molecular-weight compound may be a compound obtained by converting some or all hydroxy groups in a polyoxyalkylene polyol to amino groups; or a compound obtained in such a manner that a prepolymer having isocyanate groups at its terminals, is obtained by reacting a polyoxyalkylene polyol with an excess equivalent of a polyisocyanate compound, and the isocyanate groups of the prepolymer are converted to amino groups by hydrolysis.

The piperazine polyol is a polyoxyalkylene polyol obtainable by subjecting an alkylene oxide to ring-opening addition polymerization to piperazines.

The piperazines mean piperazine or a substituted piperazine wherein a hydrogen atom in the piperazine is substituted by an organic group such as an alkyl group or an aminoalkyl group.

The piperazines are required to have at least two active hydrogen atoms.

In the piperazine polyol, two nitrogen atoms constituting a piperazine ring constitute tertiary amines.

The piperazines may be piperazine, alkyl piperazines in which a hydrogen atom bonded to a carbon atom constituting the ring is substituted by a lower alkyl group (such as 2-methylpiperazine, 2-ethylpiperazine, 2-butylpiperazine, 2-hexylpiperazine, 2,5-, 2,6-, 2,3- or 2,2-dimethylpiperazine or 2,3,5,6- or 2,2,5,5-tetramethylpiperazine) or N-aminoalkylpiperazines in which a hydrogen atom bonded to a nitrogen atom constituting the ring, is substituted by an aminoalkyl group (such as N-(2-aminoethyl)piperazine). Preferred are substituted piperazines, and particularly preferred are substituted piperazines having at least 3 nitrogen atoms in its molecule, such as piperazine having hydrogen substituted by e.g. an aminoalkyl group.

Further, as the substituted piperazines, N-substituted piperazines are preferred, N-aminoalkylpiperazines are more preferred, and N-(aminoethyl)piperazine is particularly preferred.

An alkylene oxide to be subjected to ring-opening addition polymerization to such piperazines, is preferably an alkylene oxide having at least 2 carbon atoms, such as ethylene oxide, propylene oxide, 1,2-butylene oxide, 2,3-butylene oxide or styrene oxide.

The molecular weight per functional group of such another high-molecular-weight active hydrogen compound is preferably at least 400, particularly preferably at least 800. The molecular weight per functional group is preferably at most 5,000.

The average number of functional groups of such another high-molecular-weight active hydrogen compound is preferably from 2 to 8.

The proportion of such another high-molecular-weight active hydrogen compound is preferably at most 20 mass%, based on the total amount (100 mass%) of the polyol (A) and another high-molecular-weight active hydrogen compound. When the proportion of such another high-molecular-weight active hydrogen compound is at most 20 mass%, the reactivity with the polyisocyanate compound (B) will not be too high, whereby the moldability or the like of the flexible polyurethane foam tends to be good.

[POLYISOCYANATE COMPOUND (B)]

The polyisocyanate compound (B) may, for example, be an aromatic polyisocyanate compound having at least 2 isocyanate groups, a mixture of two or more of such compounds, or a modified polyisocyanate obtained by modifying it. Specifically, it may, for example, be a polyisocyanate such as tolylene diisocyanate (TDI), diphenylmethane diisocyanate (MDI), polymethylene polyphenyl isocyanate (common name: polymeric MDI) or xylylene diisocyanate (XDI), or its prepolymer type modified product, isocyanurate modified product, urea modified product or carbodiimide modified product. Among them, polymeric MDI or its modified product is preferred, and a modified product of polymeric MDI is particularly preferred. The polyisocyanate compounds (B) may be used alone or as a mixture of two or more. Further, an aliphatic polyisocyanate compound, an alicyclic polyisocyanate compound or the like may be used alone or in combination with the aromatic polyisocyanate compound. The aliphatic polyisocyanate compound or the alicyclic polyisocyanate compound may be a polyisocyanate such as isophorone diisocyanate (IPDI) or hexamethylene diisocyanate (HMDI).

The total amount of MDI and polymeric MDI in the polyisocyanate compound (B) (100 mass%) is preferably more than 0 mass% and at most 100 mass%, more preferably from 5 to 80 mass%, particularly preferably from 10 to 60 mass%. When the total amount of MDI and polymeric MDI is at most 80 mass%, the foam physical properties such as durability, touch of a foam, etc. become good.

The polyisocyanate compound (B) may be a prepolymer. The prepolymer may be a prepolymer of TDI, MDI or polymeric MDI with a polyol derived from a natural fat/oil, a polyoxyalkylene polyol having an alkylene oxide subjected to ring-opening addition polymerization to the polyol derived from a natural fat/oil, or a polyoxyalkylene polyol derived from petroleum.

Usually, the polyisocyanate compound (B) is liquid. The viscosity of the polyisocyanate compound (B) at 25°C is preferably from 50 to 450 mPa·s, particularly preferably from 50 to 300 mPa·s. Within such a range, a flexible polyurethane foam to be obtained hardly shrinks. Further, the workability at the time of molding tends to be good, and the outer appearance of the flexible polyurethane foam to be obtained will be good.

The amount of the polyisocyanate compound (B) is preferably from 70 to 125, particularly preferably from 80 to 120, by the isocyanate index. The isocyanate index is a value represented by 100 times of the number of isocyanate groups based on the total active hydrogen of the polyol (A), another high-molecular-weight active hydrogen compound, a crosslinking agent, water, and the like.

[CROSSLINKING AGENT]

In the present invention, it is possible to use a crosslinking agent as a case requires.

The crosslinking agent is preferably a compound having from 2 to 8 active hydrogen-containing groups and a hydroxy value of from 200 to 2,000 mgKOH/g. The crosslinking agent may be a compound which has at least 2 functional groups selected from hydroxy groups, primary amino groups and secondary amino groups. The above polyol (a1) derived from a natural fat/oil is not included. Such crosslinking agents may be used alone or in combination as a mixture of two or more of them.

The crosslinking agent having hydroxy groups is preferably a compound having 2 to 8 hydroxy groups, and may, for example, be a polyhydric alcohol, or a low-molecular-weight polyoxyalkylene polyol obtained by adding an alkylene oxide to the polyhydric alcohol or a polyol having a tertiary amino group.

Specific examples of the crosslinking agent having hydroxy groups may be ethylene glycol, 1,4-butanediol, neopentyl glycol, 1,6-hexanediol, diethylene glycol, triethylene glycol, dipropylene glycol, monoethanolamine, diethanolamine, triethanolamine, glycerin, N-alkyl diethanol, a bisphenol A-alkylene oxide adduct, a glycerin-alkylene oxide adduct, a trimethylolpropane-alkylene oxide adduct, a pentaerythritol-alkylene oxide adduct, a sorbitol-alkylene oxide adduct, a sucrose-alkylene oxide adduct, an aliphatic amine-alkylene oxide adduct, an alicyclic amine-alkylene oxide adduct, a heterocyclic polyamine-alkylene oxide adduct, and an aromatic amine-alkylene oxide adduct, and diethanolamine is referred, since hysteresis loss is suited.

The heterocyclic polyamine-alkylene oxide adduct is obtained by subjecting an alkylene oxide to ring-opening addition polymerization to e.g. piperazine, a short-chain alkyl-substituted piperazine (such as 2-methylpiperazine, 2-ethylpiperazine, 2-butylpiperazine, 2-hexylpiperazine, 2,5-, 2,6-, 2,3- or 2,2-dimethylpiperazine, or 2,3,5,6-or 2,2,5,5-tetramethylpiperazine), or an aminoalkyl-substituted piperazine (such as 1-(2-aminoethyl)piperazine).

A crosslinking agent (an amine type crosslinking agent) having a primary amino group or secondary amino group may, for example, be an aromatic polyamine, an aliphatic polyamine or an alicyclic polyamine.

The aromatic polyamine is preferably an aromatic diamine. The aromatic diamine is preferably an aromatic diamine having at least one substituent selected from an alkyl group, a cycloalkyl group, an alkoxy group, an alkylthio group and an electron-attractive group, in an aromatic nucleus having amino groups bonded thereto, particularly preferably a diaminobenzene derivative.

With respect to the above substituents except for the electron-attractive group, from 2 to 4 substituents are preferably bonded to the aromatic nucleus having amino groups bonded thereto, more preferably at least one at an ortho-position to the position where the amino group is bonded, particularly preferably, they are bonded at all positions.

With respect to the electron-attractive group, 1 or 2 groups are preferably bonded to the aromatic nucleus having amino groups bonded thereto. The electron-attractive group and another substituent may be bonded to one aromatic nucleus.

The alkyl group, alkoxy group and alkylthio group preferably have at most 4 carbon atoms.

The cycloalkyl group is preferably a cyclohexyl group.

The electron-attractive group is preferably a halogen atom, a trihalomethyl group, a nitro group, a cyano group or an alkoxycarbonyl group, particularly preferably a chlorine atom, a trifluoromethyl group or a nitro group.

The aliphatic polyamine may, for example, be a diaminoalkane having at most 6 carbon atoms, a polyalkylene polyamine, a polyamine obtained by converting some or all hydroxy groups in a low-molecular-weight polyoxyalkylene polyol to amino groups, or an aromatic compound having at least 2 aminoalkyl groups.

The alicyclic polyamine may be a cycloalkane having at least 2 amino groups and/or aminoalkyl groups.

Specific examples of the amine type crosslinking agent may be 3,5-diethyl-2,4(or 2,6)-diaminotoluene (DETDA), 2-chloro-p-phenylenediamine (CPA), 3,5-dimethylthio-2,4(or 2,6)-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl)methane, 4,4-diaminodiphenylmethane, ethylenediamine, m-xylenediamine, 1,4-diaminohexane, 1,3-bis(aminomethyl)cyclohexane and isophorone diamine, and preferred is diethyltoluenediamine (that is one type or a mixture of two or more types of 3,5-diethyl-2,4(or 2,6)-diaminotoluene), dimethylthiotoluenediamine or a diaminobenzene derivative such as monochlorodiaminobenzene or trifluoromethyldiaminobenzene.

The amount of the crosslinking agent is preferably from 0.1 to 10 parts by mass based on 100 parts by mass of the polyol (A).

[CATALYST (C)]

The catalyst (C) is a catalyst to accelerate a urethane-forming reaction.

As the catalyst (C), an amine compound, an organic metal compound, a reactive amine compound or a metal carboxylate may, for example, be mentioned. Such catalysts (C) may be used alone or in combination as a mixture of two or more of them.

As the amine compound, triethylenediamine, a dipropylene glycol solution of bis-((2-dimethylamino)ethyl)ether and an aliphatic amine such as morpholine may, for example, be mentioned.

The reactive amine compound is a compound wherein a part of the amine compound structure is converted to a hydroxy group or an amino group so as to be reactive with an isocyanate group.

As the reactive amine compound, dimethylethanolamine, trimethylaminoethylethanolamine and dimethylaminoethoxyethoxyethanol may, for example, be mentioned.

The amount of the amine compound catalyst or the reactive amine compound catalyst, is preferably at most 2 parts by mass, particularly preferably from 0.05 to 1.5 parts by mass, per 100 parts by mass in total of the polyol (A) and another high-molecular-weight active hydrogen compound.

The organic metal compound may, for example, be an organic tin compound, an organic bismuth compound, an organic lead compound or an organic zinc compound. Specific examples may be di-n-butyltin oxide, di-n-butyltin dilaurate, di-n-butyltin, di-n-butyltin diacetate, di-n-octyltin oxide, di-n-octyltin dilaurate, monobutyltin trichloride, din-butyltin dialkyl mercaptan, and di-n-octyltin dialkyl mercaptan.

The amount of the organic metal compound is preferably at most 2 parts by mass, particularly preferably from 0.005 to 1.5 parts by mass, per 100 parts by mass in total of the polyol (A) and another high-molecular-weight active hydrogen compound.

[BLOWING AGENT (D)]

As a blowing agent (D), preferred is at least one member selected from the group consisting of water and an inert gas. In view of handling efficiency and reduction in the environmental burden, water is preferably used as a part of or all of the blowing agent, and it is particularly preferred that water is used as all of the blowing agent.

As the inert gas, air, nitrogen gas or liquified carbon dioxide gas may be mentioned.

The amount of such a blowing agent may be adjusted depending on the requirement such as a blowing magnification.

When only water is used as the blowing agent, the amount of water is preferably at most 10 parts by mass, particularly preferably from 0.1 to 8 parts by mass, per 100 parts by mass in total of the polyol (A) and another high-molecular-weight active hydrogen compound.

[FOAM STABILIZER]

In the present invention, a foam stabilizer may be used as the case requires.

The foam stabilizer is a component to form good foams.

The foam stabilizer may, for example, be a silicone type foam stabilizer or a fluorine type foam stabilizer.

The amount of the foam stabilizer is preferably from 0.1 to 10 parts by mass per 100 parts by mass in total of the polyol (A) and another high-molecular-weight active hydrogen compound.

[CELL OPENER]

In the present invention, a cell opener may be used as the case requires.

The use of the cell opener is preferred from the viewpoint of the moldability of the flexible polyurethane foam, specifically, the reduction of tight cells.

The cell opener is preferably a polyoxyalkylene polyol having an average of from 2 to 8 hydroxy groups, a hydroxy value of from 20 to 100 mgKOH/g and a proportion of ethylene oxide of from 50 to 100 mass%.

[OTHER FORMULATING AGENTS]

In the present invention, optional formulating agents may be used. The formulating agents may, for example, be a filler such as calcium carbonate or barium sulfate; an anti-aging agent such as an antioxidant or an ultraviolet absorber; a flame retardant, a plasticizer, a colorant, a fungicide, a cell opener, a dispersing agent and a discoloration inhibitor.

[PROCESS FOR PRODUCING FLEXIBLE POLYURETHANE FOAM]

The process for producing a flexible polyurethane foam may be carried out by a method in which a reactive mixture is injected into a closed mold, followed by expansion molding (a molding method) or a method in which a reactive mixture is foamed in an open system (a slab method).

MOLDING METHOD

As the molding method, preferred is a method of directly injecting the reactive mixture into a closed mold (a reaction-injection molding method) or a method in which the reactive mixture is injected into a mold in an open state, followed by closing. As the latter method, it is preferably carried out by a method of injecting the reactive mixture into a mold by using a low pressure machine or a high pressure machine.

The high pressure machine is preferably of a type to mix two liquids. One of the two liquids is the polyisocyanate compound (B) and the other liquid is a mixture of all components other than the polyisocyanate compound (B). Depending on a case, it may be a type to mix three liquids by having the catalyst (C) or the cell opener as a separate component (which is usually used as dispersed or dissolved in a part of a high-molecular-weight polyol).

The temperature of the reactive mixture is preferably from 10 to 40˚C. When the temperature is at least 10˚C, the viscosity of the reactive mixture will not be so high, whereby liquid mixing of the liquids tends to be good. When the temperature is at most 40˚C, the reactivity will not be too high, whereby the moldability or the like tends to be good.

The mold temperature is preferably from 10˚C to 80˚C, particularly preferably from 30˚C to 70˚C.

The curing time is preferably from 1 to 20 minutes, more preferably from 1 to 10 minutes, particularly preferably from 1 to 7 minutes. When the curing time is at least the lower limit of the above range, curing will be sufficiently conducted. When the curing time is at most the upper limit of the above range, productivity will be good.

SLAB METHOD

The slab method may be a known method such as a one shot method, a semiprepolymer method or a prepolymer method. For the production of the flexible polyurethane foam, it is possible to use a known production apparatus.

According to the present invention, by incorporating the epoxidized natural fat/oil (x) in the polymer-dispersed polyol using materials derived from a natural fat/oil, a low viscosity is achieved without lowering the biomass degree of the flexible polyurethane foam.

As the epoxidized natural fat/oil is also derived from a natural fat/oil, the above effect can be obtained without lowering the biomass degree.

By the polymer-dispersed polyol have a low viscosity, good liquid flowability will be obtained, and uniformity of the foam is improved particularly when a foam having a complicated shape is molded.

The flexible polyurethane foam to be produced by the process of the present invention can be used for an interior material for an automobile (such as seat cushions, seat backs, head rests or arm rests), an interior material for a railway vehicle, bedding, a mattress, a cushion, etc.

EXAMPLES

Now, the present invention will be described in further detail with reference to Examples, but it should be understood that the present invention is by no means limited thereto.

In the following, "%" means "mass%" unless otherwise specified.

Examples 2, 3, 5, 6, 8 and 9 are Examples of the present invention, and Examples 1, 4, 7, 10, 11 and 12 are Comparative Examples.

Measurements were carried out by the following methods.

(HYDROXY VALUE)

The hydroxy values of polyols other than the polymer-dispersed polyol (A1) were measured in accordance with JIS K 1557 (2007 edition) (titration method).

If the hydroxy value of the polymer-dispersed polyol (A1) is measured by the titration method, the measurement tends to be hindered by a resin precipitation, and therefore, it was obtained by measuring the polymerization balance by calculation in accordance with the above formula (1) or (2).

(NUMBER AVERAGE MOLECULAR WEIGHT AND WEIGHT AVERAGE MOLECULAR WEIGHT)

The number average molecular weight (Mn) and the weight average molecular weight (Mw) were measured by the following process.

With respect to some types of monodispersed polystyrene polymers having different polymerization degrees, which are commercially available as standard samples for molecular weight measurement, GPC was measured by using a commercially-available GPC measuring device (tradename: HLC-8220GPC, manufactured by TOSOH CORPORATION), and based on the relation of the molecular weight and the maintaining retention time of each polystyrene, a calibration curve was prepared.

A sample was diluted by tetrahydrofuran to 0.5 mass% and passed through a filter of 0.5 $\mu$m, and GPC of the sample was measured by using the GPC measuring device.

By using the calibration curve, the GPC spectrum of a sample was analyzed by a computer, whereby the number average molecular weight (Mn) and the weight average molecular weight (Mw) of the sample were obtained.

(BIOMASS DEGREE)

The biomass degree of polyols (including a polymer-dispersed polyol) was calculated as a proportion (unit: %) of the mass of the materials derived from a natural fat/oil, based on the total mass of the materials which constitute the polyol.

The biomass degree of the flexible polyurethane foam was calculated as a proportion (unit: %) of the mass of the materials derived from a natural fat/oil contained in the materials (such as a polyol, a polyisocyanate, a catalyst and a blowing agent) which constitute the flexible polyurethane foam, based on the total mass of these components.

The mass of the materials derived from a natural fat/oil contained in the polyol is

{the mass of the polyol} × {the biomass degree (%) of the polyol} / 100.

(VISCOSITY OF POLYMER-DISPERSED POLYOL)

The viscosity of the polymer-dispersed polyol was measured In accordance with JIS K1557-5 (2007 edition) using a B type viscometer (manufactured by TOKI SANGYO CO., LTD., BL type) at a measurement temperature of 25˚C. In view of good compatibility with the polyisocyanate compound (B) and with a view to lowering the viscosity of the reaction mixture, it is preferably at most 12,000 mPa·s, more preferably at most 10,000 mPa·s, particularly preferably at most 9,000 mPa·s. The lower limit is not particularly limited, but is preferably at least 200 mPa·s, particularly preferably at least 300 mPa·s, with a view to securing the moldability of the flexible polyurethane foam.

<Example for production of polymer-dispersed polyol>

Polymer-dispersed polyols POP1 to 3 as identified in Table 1 were produced. In Table 1, results of measuring the viscosity of POP1 to 3 are also shown. As the materials, the following were used.

[EPOXIDIZED NATURAL FAT/OIL (x)]

As the epoxidized soybean oil (x-1), O-130P (tradename) manufactured by ADEKA CORPORATION was used.

(POLYOL (a1) DERIVED FROM A NATURAL FAT/OIL)

As the polyol (a1-1) derived from soybean oil, commercially available aerated soybean oil (tradename: Soyol R2-052F, manufactured by Urethane Soy Systems Company) was prepared. The hydroxy value was 45.3 mgKOH/g, the number average molecular weight (Mn) was 2,400, and the molecular weight distribution (Mw/Mn) was 4.061.

EXAMPLE 1 (Comparative Example): Production of polymer-dispersed polyol POP1, no epoxidized natural fat/oil

Into a 2L glass bottle, a liquid mixture for dropwise addition, comprising 1,053.4 g of the polyol (a1-1) derived from soybean oil, 670.0 g of acrylonitrile, 232.2 g of styrene and 33.8 g of 2,2'-azobis(2-methylbutyronitirle) was added, and the glass bottle was attached to a rotary type quantitative supply pump equipped with a tube (manufactured by Tokyo Rikakikai Co., Ltd., tradename: MP-1000).

The mass of a reactor comprising a 1 L separable flask equipped with a vacuum stirrer and a stirring stick was measured and regarded as the tare ($W_0$). 2,521.5 g of the polyol (a1-1) derived from soybean oil for initial charge was added thereto, and exit tubes for a condenser tube and a liquid supply pump were attached. Then, the separable flask was immersed in an oil bath at 125˚C to adjust the inner temperature to be 120±5˚C. After the temperature became stable, the liquid mixture for dropwise addition was dropwise added at a constant rate over 3 hours. After dropwise addition, the reaction was subjected to aging for 30 minutes. The volatile substances such as unreacted monomers were distilled off in vacuum for 2 hours at 120°C under 0.0004 MPa to obtain a polymer-dispersed polyol (POP1). Here, the mass $W_1$ of the reactor and the content before distillation in vacuum and the mass $W_2$ of the reactor and the content after the distillation in vacuum were measured, to determine the mass of the volatile substances such as unreacted monomers. The hydroxy value of the polymer-dispersed polyol (POP1) was calculated in accordance with the following formula and as a result, it was 38.9 mgKOH/g.

$$\text{Hydroxy value} = \{\text{hydroxy value 46.52 mgKOH/g of polyol (a1-1) derived from soybean oil}\} \times \{100 - \text{proportion (\%) of polymer particles}\}/100$$

$$\text{Proportion (\%) of the polymer particles} = \{\text{amount (g) of acrylonitrile charged} + \text{amount (g) of styrene charged and amount (g) of 2,2'-azobis(2-methylbutyronitrile) charged} - \text{amount } (W1-W2) \text{ of unreacted monomers and the like volatilized}\}/\text{total amount charged} \times 100$$

The proportion of the polymer particles was 16.3 mass% as calculated in accordance with the above formula.

The biomass degree of the polymer-dispersed polyol (POP1) was calculated in accordance with the following formula, whereupon it was 83.7%.

$$\text{Biomass degree} = \text{biomass degree 100\% of polyol (a1-1) derived from soybean oil} \times \text{proportion of polymer particles}/100$$

The proportion of the polymer particles contained in the polymer-dispersed polyol or the proportion of the polymer particles in the polyol-containing mixture can be measured by the following method. The measurement result is substantially equal to the above-described calculation result.

In a centrifuge tube, $5 \pm 0.01$ g (a1) of the polymer-dispersed polyol (or polyol-containing mixture) is put, and 25 g of methanol is added. The content is well stirred to disperse the polymer particles in the polymer-dispersed polyol (or polyol-containing mixture), and the centrifuge tube is closed with a lid. The centrifuge tube is rotated by a centrifugal separator at 12,000 revolutions per minute for 30 minutes. After the centrifugal separator is stopped, the centrifuge tube is taken out, and the supernatant liquid is thrown away. The content is dried by a vacuum dryer at 40°C under a gage pressure of -0.10 MPa for 1 hour, and the polymer mass (a2) is measured. The solid content in the polymer is pulverized, and the polymer mass (a3) is measured again. The polymer is dried again by a vacuum dryer at 40°C under a gage pressure of -0.10 mPa·s for 2 hours, and the polymer mass (α4) is measured. Then, the proportion of the polymer particles is calculated in accordance with the following formula.

$$\text{Proportion (\%) of polymer particles} = (\alpha 2 \times \alpha 4) \times 100/(\alpha 1 \times \alpha 3)$$

EXAMPLE 2 (Example of the present invention): Production of polymer-dispersed polyol POP2

Into a 2L glass bottle, a liquid mixture for dropwise addition, comprising 105.4 g of the polyol (a1-1) derived from soybean oil, 105.22 g of the epoxidized soybean oil (x-1), 134.11 g of acrylonitrile, 44.76 g of styrene and 6.74 g of 2,2'-azobis(2-methylbutyronitrile) was added, and the glass bottle was attached to the same quantitative supply pump as in Example 1.

The mass of a reactor comprising a 1 L separable flask equipped with a vacuum stirrer and a stirring stick was measured and regarded as the tare ($W_0$). 252.07 g of the polyol (a1-1) derived from soybean oil for initial charge and 252.24 g of the epoxidized soybean oil (x-1) were added, and exit tubes for a condenser tube and a liquid supply pump were attached. In the same manner as in Example 1, dropwise addition, aging and distillation of volatile substances in vacuum were carried out to obtain a polymer-dispersed polyol (POP2). The mass $W_1$ of the reactor and the content before distillation in vacuum and the mass $W_2$ of the reactor and the content after distillation in vacuum were measured to determine the mass of the volatile substances such as unreacted monomers. The hydroxy value of the polymer-dispersed polyol (POP2) was calculated in accordance with the following formula, whereupon it was 19.4 mgKOH/g. In this Example, the hydroxy value of the epoxidized soybean oil is regarded as 0 mgKOH/g.

$$\text{Hydroxy value}=\{\text{hydroxy value 46.52 mgKOH/g of polyol (a1-1) derived from soybean oil}\}\times\{100-\text{proportion (\%) of polymer particles}\}/100$$

$$\text{Proportion (\%) of polymer particles}=\{\text{amount (g) of acrylonitrile charged}+\text{amount (g) of styrene charged}+\text{amount (g) of 2,2'-azobis(2-methylbutyronitrile) charged}-\text{amount (W1-W2) of unreacted monomers and the like volatilized}\}/\text{total amount charged} \times 100$$

The proportion of the polymer particles was calculated from the above formula, whereupon it was 16.7 mass%.

The biomass degree of the polymer-dispersed polyol (POP2) was calculated in accordance with the following formula, whereupon it was 83.3%.

$$\text{Biomass degree}=[\text{biomass degree 100\% of polyol (a1-1) derived from soybean oil} \times \text{proportion of polymer particles}/100$$

EXAMPLE 3 (Example of the present invention): Production of polymer-dispersed polyol POP3

To 48.49 parts by mass of the polymer-dispersed polyol (POP1), 51.51 parts by mass of the epoxidized soybean oil (x-1) was added to obtain a polymer-dispersed polyol (POP3). The hydroxy value of the polymer-dispersed polyol (POP3) was calculated from the following formula, whereupon it was 18.86 mgKOH/g.

$$\text{Hydroxy value}=(\text{hydroxy value of POP1} \times \text{parts by mass of POP1} + \text{hydroxy value of epoxidized soybean oil (x-1)} \times \text{parts by mass of epoxidized soybean oil})/(\text{parts by mass of POP1} + \text{parts by mass of epoxidized soybean oil (x-1)})$$

The biomass degree of the polymer-dispersed polyol (POP3) was calculated from the following formula, whereupon it was 92.1 %.

$$\text{Biomass degree}=\{\text{parts by mass of POP1} \times \text{biomass degree of POP1} + \text{parts by mass of epoxidized soybean oil (x-1)} \times \text{biomass degree of epoxidized soybean oil}\}/\{\text{parts by mass of POP1} + \text{parts by mass of epoxidized soybean oil}\}$$

The proportion of the polymer particles was calculated from the following formula, whereupon it was 7.9 mass%.

Proportion of polymer particles=parts by mass of POP1 × proportion of polymer particles of POP1/{parts by mass of POP1 + parts by mass of epoxidized soybean oil}

TABLE 1

| | | Ex. 2 | Ex. 2 | Ex. 3 |
|---|---|---|---|---|
| Compositional ratio of polymer-dispersed polyol (A1) polyol | Polyol (a1-1) derived from soybean oil (mass%) | 83.7 | 41.65 | 40.59 |
| | Polymer particles (mass%) | 16.3 | 16.7 | 7.9 |
| | Epoxidized soybean oil (x-1) (mass%) | | 41.65 | |
| | Epoxidized soybean oil (x-1) added (mass%) | | | 51.51 |
| | Polymer-dispersed polyol (mass%) | 100 | 100 | 100 |
| Obtained polymer-dispersed polyol (A1) | | POP1 | POP2 | POP3 |
| Physical properties of polymer-dispersed polyol (A1) | Hydroxy value (mgKOH/g) | 38.9 | 19.4 | 18.86 |
| | Viscosity of polymer-dispersed polyol (mPa·s) | 18,000 | 6,600 | 4,800 |
| | Biomass degree (%) | 83.7 | 83.3 | 92.1 |

<Production of flexible polyurethane foam>

Using the polymer-dispersed polyols POP1 to 3 obtained in Examples 1 to 3, polyoxyalkylene polyols (A2-1) to (A2-3) derived from petroleum produced by the following method and another polymer-dispersed polyol (A3-1), and the following materials, flexible polyurethane foams were produced in blend ratios as identified in Table 2.
Further, the obtained flexible polyurethane foams were subjected to evaluation by the following methods. The evaluation results are shown in Table 2.

[Example for preparation of DMC catalyst]

A zinc hexacyanocobaltate complex (DMC catalyst) having tert-butyl alcohol (hereinafter sometimes referred to as TBA) coordinated was prepared as follows.
In a 500 mL flask, an aqueous solution comprising 10.2 g of zinc chloride and 10 g of water was put. While the zinc chloride aqueous solution was stirred at 300 revolutions per minute, an aqueous solution comprising 4.2 g of potassium hexacyanocobaltate ($K_3Co(CN)_6$) and 75 g of water was dropwise added to the zinc chloride aqueous solution over a period of 30 minutes. During the dropwise addition, the mixed solution in the flask was kept at 40°C. After completion of dropwise addition of the potassium hexacyanocobaltate aqueous solution, the mixture in the flask was stirred further for 30 minutes, and a mixture comprising 80 g of TBA, 80 g of water and 0.6 g of the polyol P was added, followed by stirring at 40°C for 30 minutes and at 60°C further for 60 minutes.
The polyol P is a polyoxypropylene diol having a hydroxy equivalent of 501 obtained by subjecting propylene oxide to ring-opening addition polymerization to propylene glycol in the presence of a potassium hydroxide (KOH) catalyst, followed by dealkalization purification.
The obtained mixture was subjected to filtration using a circular filter plate having a diameter of 125 mm and a quantitative filter paper for particles (manufactured by ADVANTEC Toyo Kaisha, Ltd., No. 5C) under elevated pressure (0.25 MPa) to obtain a solid (cake) containing a double metal cyanide complex catalyst.
The cake was put in a flask, a mixed liquid comprising 36 g of TBA and 84 g of water was added, followed by stirring for 30 minutes, and the mixture was subjected to filtration under elevated pressure under the same conditions as above to obtain a cake.
The cake was put in a flask, and a mixed liquid comprising 108 g of TBA and 12 g of water was further added, followed by stirring for 30 minutes to obtain a slurry having the double metal cyanide complex catalyst dispersed in the TBA-water mixed liquid. 120 g of the polyol P was added to the slurry, and volatile components were distilled off under reduced pressure at 80˚C for 3 hours and at 115˚C further for 3 hours to obtain a DMC catalyst in the form of a slurry (hereinafter sometimes referred to as "a TBA-DMC catalyst slurry"). The concentration (active ingredient concentration) of the DMC catalyst (solid catalyst component) contained in the slurry was 5.33 mass%.

[Production of polyoxyalkylene polyol (A2-1)]

Propylene oxide (hereinafter sometimes referred to as PO) was subjected to ring-opening addition polymerization to an initiator in the presence of a KOH catalyst, and then ethylene oxide (hereinafter sometimes referred to as EO) was subjected to ring-opening addition polymerization.

As the initiator, a polyoxyalkylene polyol having a number average molecular weight (Mn) of 1,200, obtained by subjecting PO to ring-opening addition polymerization to pentaerythritol using a KOH catalyst was used.

In a reactor, 1,000 g of the initiator, 20 g (active ingredient concentration based on final product: 0.3%) of the KOH catalyst and 5,664 g of PO were charged, followed by stirring at 120˚C for 10 hours to carry out ring-opening addition polymerization. Then, 1,023 g of EO was further charged, followed by stirring at 110˚C for 1.5 hours to carry out ring-opening addition polymerization to obtain a polyoxyalkylene polyol (A2-1).

Of the obtained polyoxyalkylene polyol (A2-1), the hydroxy value was 28 mgKOH/g, the number average molecular weight (Mn) was 11,040, the molecular weight distribution (Mw/Mn) was 1.038, and the terminal oxyethylene group content was 13 mass%.

[Production of polyoxyalkylene polyol (A2-2)]

As the initiator, a polyoxypropylene triol having a number average molecular weight (Mn) of 1,500 and a hydroxy value of 112 mgKOH/g, produced by subjecting PO to ring-opening addition polymerization to glycerin by using a KOH catalyst, followed by purification by KYOWAAD 600S (tradename, synthetic adsorbent, manufactured by Kyowa Chemical Industry Co., Ltd.) was used.

First, in a pressure resistant reactor, 1,000 g of the initiator and the above-prepared TBA-DMC catalyst slurry were charged to obtain a reaction liquid. The amount of the TBA-DMC catalyst charged was such an amount that the concentration (hereinafter referred to as the initial catalyst metal concentration) of metals in the TBA-DMC catalyst in the reaction liquid became 46 ppm.

As the pressure resistant reactor, a pressure resistant reactor (capacity: 10L, diameter: 200 mm, height: 320 mm) made of stainless steel (JIS-SUS-316) equipped with a stirrer having one pair of anchor blades and two pairs of 45˚ inclined two-plate paddle blades attached, and having a condenser tube through which cooling water flows provided in the interior of the container, was used.

As measurement of the temperature of the reaction liquid, the liquid temperature was measured by a thermometer placed at the lower portion in the interior of the pressure resistant reactor.

Then, the interior in the pressure resistant reactor was replaced with nitrogen, then the reaction liquid was heated with stirring, stirring was stopped when the liquid temperature reached 135˚C (initial temperature), and while stirring was continued, 120 g (12 parts by mass per 100 parts by mass of the initiator) of PO was supplied into the pressure resistant reactor at a rate of 600 g/hr and reacted.

When PO was supplied into the pressure resistant reactor (initiation of the step (a)), the internal pressure of the pressure resistant reactor was once increased and then gradually decreased, and it was confirmed to be the same internal pressure of the pressure resistant reactor immediately before supply of PO (completion of the step (a)). During this reaction, when the decrease in the internal pressure started, the temperature of the reaction liquid was once increased subsequently and then gradually decreased. The maximum temperature of the reaction liquid was 165˚C. In this Example, after the temperature increase of the reaction liquid stopped, cooling was conducted. Further, the time for this step (a) was 30 minutes.

Then, PO was supplied and reacted (step (b)), and after completion of the step (b), the alkali metal catalyst was used to react EO. That is, while the reaction liquid was stirred subsequently to the completion of the step (a), the reaction liquid being cooled to 135˚C was confirmed, and while the temperature of 135˚C was maintained, 4,728 g of PO was supplied to the pressure resistant reactor at a rate of about 600 g/hr. It was confirmed that the internal pressure no more changed and the reaction was completed (completion of the step (b)). Then, 20 g (active ingredient concentration to the final product: 0.3%) of the KOH catalyst was added, to carry out alkoxylation by dehydration at 120˚C for 2 hours. Then, while the reaction liquid was maintained at 120˚C, 950 g of EO was additionally supplied to the pressure resistant reactor at a rate of about 200 g/hr. It was confirmed that the internal pressure no more changed and the reaction was completed, the operation of neutralizing and removing the catalyst was carried out by using KYOWAAD 600S (tradename, synthetic adsorbent, manufactured by Kyowa Chemical Industry Co., Ltd.).

Of the obtained polyoxyalkylene polyol (A2-2), the average number of hydroxy groups was 3, the hydroxy value was 16.8 mgKOH/g, the number average molecular weight (Mn) was 13,228, the degree of unsaturation was 0.007 meq/g, the molecular weight distribution (Mw/Mn) was 1,045, and the terminal oxyethylene group content was 14 mass%.

[Production of polyoxyalkylene polyol (A2-3)]

A polyether polyol (A2-3) was produced in the same manner as in Production Example A2-2 except that the initial catalyst metal concentration of the TBA-DMC catalyst slurry prepared as described above was 46 ppm, in the step (a), the PO supply amount was 120 g (12 parts by mass per 100 parts by mass of the initiator), the PO supply rate was 600 g/hr, the initial temperature was 135˚C and the maximum temperature was 164˚C, in the step (b), the PO supply amount was 5,069 g and the PO supply rate was 600 g/hr, and after completion of the step (b), the EO supply amount was 611 g and the EO supply rate was 200 g/hr.

Of the obtained polyoxyalkylene polyol (A2-3), the average number of hydroxy groups was 3, the hydroxy value was 17 mgKOH/g, the number average molecular weight (Mn) was 13,077, the molecular weight distribution was 1,089, and the terminal oxyethylene group content was 9 mass%.

[Another polymer-dispersed polyol (A3)]

As another polymer-dispersed polyol (A3-1), a polymer-dispersed polyol comprising a polyoxyalkylene polyol derived from petroleum as the matrix was prepared.

Using glycerin as the initiator, PO and EO were subjected to ring-opening addition polymerization in this order in the presence of the KOH catalyst, to obtain a polyoxypropylene oxyethylene polyol having an average of 3 functional groups and a hydroxy value of 34 mgKOH/g, and containing 14.5 mass% of polyoxyethylene groups at its terminals. Further, in the polyoxypropylene oxyethylene polyol, in the presence of 2,2'-azobis(2-methylbutyronitrile) (sometimes referred to as AMBN) acrylonitrile, acrylonitrile and styrene were copolymerized at a mass ratio of 77.5/22.5 to obtain a polymer-dispersed polyol (A3-1).

Of the obtained polymer-dispersed polyol (A3-1), the hydroxy value was 23.5 mgKOH/g and the proportion (calculated value) of the polymer particles was 35 mass%.

[Crosslinking agent (E-1)]

Diethanolamine

[Crosslinking agent (E-2)]

A polyoxypropylene oxyethylene polyol having an average of 6 hydroxy groups and a hydroxy value of 445 mgKOH/g and containing 10 mass% of oxyethylene groups at its terminals.

[Crosslinking agent (E-3)]

A polyoxypropylene oxyethylene polyol having an average of 6 hydroxy groups and a hydroxy value of 445 mgKOH/g and containing 46 mass% of oxyethylene groups at its terminals.

[Catalyst (C-1)]

A 33% dipropylene glycol (DPG) solution of triethylenediamine (manufactured by TOSOH CORPORATION, tradename: TEDA L33).

[Catalyst (C-2)]

A 70% DPG solution of bis-(2-dimethylaminoethyl) ether (manufactured by TOSOH CORPORATION, tradename: TOYOCAT ET).

[Foam stabilizer (F-1)]

Silicone type foam stabilizer manufactured by Dow Corning Toray Co., Ltd., tradename: SZ-1325).

[Blowing agent (D-1)]

Water

[Polyisocyanate (B-1)]

A 80/20 (mass ratio) mixture of TDI-80 (2,4-TDI/2,6-TDI=80/20 (mass ratio) mixture) and polymeric MDI (manufactured by Nippon Polyurethane Industry Co., Ltd., tradename: CORONATE 1021).

<Evaluation methods>

The viscosity of the reaction mixture was measured by an E type viscometer (manufactured by Toki Sangyo Co., Ltd., RE-85U) at a measuring temperature of 25˚C after the reaction mixture was deaerated in vacuum.

·With respect to the foam physical properties, the core density, the 25% hardness (ILD hardness), the rebound resilience, the compression set and the compression set under humid condition, and the hysteresis loss were measured in accordance with JIS K6400 (1997 edition). With respect to the physical properties at the core portion, a sample obtained by removing the skin portion from the center portion of the flexible polyurethane foam, followed by cutting into a size of 100 mm in length and width and 50 mm in height, was used for the measurement.

·With respect to the evaluation of the liquid flowability, about 300 g of the reactive mixture blended in each of blend ratios in Examples 7 to 9 in Table 3 in a 1 L plastic beaker was stirred by a high speed mixer (3,000 revolutions per minute for 5 seconds), and then the reactive mixture was poured on a polyethylene plastic sheet all at once from a height of 30 cm and foamed. The flexible polyurethane foam obtainable after the reactive mixture was left to stand for 10 minutes with in the form of a substantial semisphere. The major axis, the minor axis, the height and the mass of the flexible polyurethane foam were measured. In this specification, the direction vertical to the surface of the plastic sheet is regarded as the height direction, and in a plane as observed from the height direction of the substantially semispherical flexible polyurethane foam, the length of the longest chord is regarded as the major axis. Further, among other chords which pass the center of the chord corresponding to the major axis, the length of the shortest chord is regarded as the minor axis. Further, the distance between the highest point in the height direction and the surface of the plastic sheet is regarded as the height.

·With respect to the core portion cell state, the average cell size was measured (core portion cell size) and evaluated. As the evaluation of the cell state, a case where the average cell size was at most 500 $\mu$m was evaluated as ○ (excellent), a case of from 500 to 700 $\mu$m as △ (good), and a case of more than 700 $\mu$m as × (poor). The cell size of the core portion was measured by an image processing system apparatus (tradename: Qwin-Pro, manufactured by LEICA CAMERAAG).

In Example 10, the core portion cell size was so large as at least 1,000 $\mu$m and the foam was significantly roughened, and accordingly foam physical properties were not measured.

EXAMPLE 4 (Comparative Example)

A flexible polyurethane foam was produced in a blend ratio as identified in Table 2. That is, 19 parts by mass of POP1, 49.7 parts by mass of the polyoxyalkylene polyol (A2-1), 31.3 parts by mass of the polymer-dispersed polyol (A3-1), 0.5 part by mass of the crosslinking agent (E-1), 0.75 part by mass of (E-2), 0.75 part by mass of (E-3), 0.6 part by mass of the catalyst (C-1), 0.04 part by mass of (C-2), 0.6 part by mass of the foam stabilizer (F-1) and 3.4 parts by mass of the blowing agent (D-1) were mixed to prepare a polyol-containing mixture. The polyol-containing mixture was adjusted to a liquid temperature of 30±1 ˚C. Separately, the polyisocyanate compound (B-1) was adjusted to a liquid temperature of 25±1 ˚C.

The polyisocyanate compound (B-1) was added to the polyol-containing mixture so that the isocyanate index became 100, and the mixture was stirred by a high speed mixer at 3,000 revolutions per minute for 5 seconds and immediately injected into a mold heated at 60˚C and the mold was sealed. As the mold, an aluminum mold having inner dimensions of 400 mm in length and width and 100 mm in height was used.

After reaction at 60˚C for 6 minutes, a flexible polyurethane foam was taken out from the mold, subjected to crushing and left to stand in a room (temperature: 23˚C, relative humidity: 50%) for 24 hours and then evaluated.

Crushing is a step of continuously compressing the flexible polyurethane foam after taken out from the mold up to 75% of the foam thickness.

EXAMPLES 5, 6 and 10 to 16

Flexible polyurethane foams were produced and evaluated in the same manner as in Example 4 except that the blend ratios were changed as identified in Table 2.

EXAMPLES 7 to 9

Flexible polyurethane foams were produced in blend ratios as identified in Table 3.
That is, each polyol-containing mixture was prepared in the same manner as in Example 4 and adjusted to a liquid temperature of $30\pm1$ °C. Separately, the polyisocyanate compound (B-1) was adjusted to a liquid temperature of $25\pm1$ °C.
The polyisocyanate compound (B-1) was added to the polyol-containing mixture so that the isocyanate index became 100, and the mixture was stirred by a high speed mixer at 3,000 revolutions per minute for 5 seconds. The mixture was immediately foamed on a plane polyethylene plastic sheet, whereupon evaluation of the liquid flowability was carried out.

TABLE 2

| | | | Ex. 4 | Ex. 5 | Ex. 6 | Ex. 10 | Ex. 11 | Ex. 12 | Ex. 13 | Ex. 14 | Ex.15 | Ex. 16 |
|---|---|---|---|---|---|---|---|---|---|---|---|---|
| Blend ratio | Polymer-dispersed polyol | POP1 (Comp. Ex.) | 19 | | | 40 | - | - | | | | |
| | | POP2 | | 19 | | | 40 | | 19 | | 19 | |
| | | POP3 | | | 16.5 | | | 40 | | 16.5 | | 16.5 |
| | | Polymer-dispersed polyol (A-3) | 31.3 | 31.3 | 37 | | | | 31.3 | 37 | 31.3 | 37 |
| | Polyoxyalkylene polyol (A2-1) | | 49.7 | 49.7 | 46.5 | 60 | 60 | 60 | | | | |
| | Polyoxyalkylene polyol (A2-2) | | | | | | | | 49.7 | 49.7 | | |
| | Polyoxyalkylene polyol (A2-3 | | | | | | | | | | 49.7 | 49.7 |
| | Catalyst (C-1) | | 0.6 | 0.6 | 0.6 | 0.6 | 0.6 | 0.6 | 0.6 | 0.6 | 0.6 | 0.6 |
| | Catalyst (C-2) | | 0.04 | 0.04 | 0.04 | 0.04 | 0.04 | 0.04 | 0.04 | 0.04 | 0.04 | 0.04 |
| | Blowing agent (D-1) | | 3.4 | 3.4 | 3.4 | 3.4 | 3.4 | 3.4 | 3.4 | 3.4 | 3.4 | 3.4 |
| | Crosslinking agent (E-1) | | 0.5 | 0.5 | 0.5 | 0.5 | 0.5 | 0.5 | 0.5 | 0.5 | 0.5 | 0.5 |
| | Crosslinking agent (E-2) | | 0.75 | 0.75 | 0.75 | 0.75 | 0.75 | 0.75 | 0.75 | 0.75 | 0.75 | 0.75 |
| | Crosslinking agent (E-3) | | 0.75 | 0.75 | 0.75 | 0.75 | 0.75 | 0.75 | 0.75 | 0.75 | 0.75 | 0.75 |
| | Foam stabilizer (F-1) | | 0.6 | 0.6 | 0.6 | 0.6 | 0.6 | 0.6 | 0.6 | 0.6 | 0.6 | 0.6 |
| | Polyisocyanate compound (B-1 ) (as represented by the index) | | 100 | 100 | 100 | 100 | 100 | 100 | 100 | 100 | 100 | 100 |
| Evaluation | Biomass degree (%) of foam | | 10.6 | 10.6 | 10.2 | 22.5 | 22.4 | 24.8 | 10.7 | 10.1 | 10.7 | 10.1 |
| | Proportion (%) of polymer particles in polyol-containing mixture (%) | | 13 | 13 | 13 | 6.5 | 6.7 | 3.2 | 14 | 14 | 14 | 14 |
| | Viscosity (mPa·s) of polyol-containing mixture | | 3,000 | 2,400 | 2,100 | Measurement impossible | | | 2,500 | 2,200 | 2,500 | 2,200 |
| | Core portion cell state size | | ○ | ○ | ○ | × | ○ | ○ | ○ | ○ | ○ | ○ |
| | Core portion cell diameter ($\mu$m) | | 285 | 307 | 393 | 1,236 | 327 | 341 | 338 | 341 | 358 | 309 |
| | Core density (kg/m$^3$) | | 46.7 | 46.4 | 47.3 | | 45.0 | 46.3 | 46.8 | 46.2 | 47.3 | 46.6 |
| | 25% Hardness (ILD hardness) (N/314 cm$^2$) | | 245 | 206 | 219 | | 140 | 143 | 230 | 247 | 187 | 201 |

27

(continued)

| | | Ex. 4 | Ex. 5 | Ex. 6 | Ex. 10 | Ex. 11 | Ex. 12 | Ex.13 | Ex. 14 | Ex.15 | Ex. 16 |
|---|---|---|---|---|---|---|---|---|---|---|---|
| Rebound resilience | Whole (%) | 52 | 56 | 56 | | 57 | 55 | 59 | 61 | 61 | 62 |
| | Core (%) | 58 | 63 | 64 | | 61 | 59 | 63 | 66 | 66 | 67 |
| Hysteresis loss (%) | | 25.3 | 23.8 | 22.2 | | 25.1 | 25.1 | 21.7 | 20.2 | 20.2 | 19.7 |
| Compression set (%) | | 4.9 | 5.2 | 5.4 | | 6.5 | 6.1 | 4.2 | 4.4 | 4.1 | 4.0 |
| Compression set under humid condition (%) | | 16.5 | 18.6 | 16.0 | | 13.9 | 12.2 | 15.5 | 14.4 | 14.8 | 14.2 |

TABLE 3

| | | | Ex. 7 | Ex. 8 | Ex. 9 |
|---|---|---|---|---|---|
| Blend ratio | | | The same as in Ex. 4 | The same as in Ex. 5 | The same as in Ex. 6 |
| Flowability | Foam mass (g) | | 319 | 320 | 314 |
| | Liquid | Major axis (mm) | 394 | 425 | 431 |
| | flowability | Minor axis (mm) | 390 | 411 | 422 |

POP2 in Example 2 is one having part of the polyol (a1) derived from soybean oil in POP1 in Example 1 substituted by the epoxidized soybean oil (x-1).

POP3 in Example 3 is one having the epoxidized soybean oil (x-1) added to POP1 in Example 1.

Each of the polymer-dispersed polyols POP2 and 3 in Examples 2 and 3 had a low viscosity, since the polymer particles are dispersed in the matrix containing the polyol derived from a natural fat/oil and the epoxidized natural fat/oil.

The viscosity of each of the polyol-containing mixtures in Examples 5, 6 and 13 to 16 was low, since the polymer particles are dispersed in the matrix containing the polyol derived from a natural fat/oil and the epoxidized natural fat/oil.

The flowability of each of the reactive mixtures for a flexible polyurethane foam in Examples 8 and 9 was good, since the polymer particles are dispersed in the matrix containing the polyol derived from a natural fat/oil and the epoxidized natural fat/oil.

As shown in results in Examples 4 to 6, in Examples 5 and 6 in which POP2 and 3 produced in Examples 2 and 3 were used, although the proportion of the polymer particles in the polyol-containing mixture excluding the polyisocyanate compound was 13% and the same as in Example 4, the viscosity of the reactive mixture was remarkably low as compared with Example 4 in which POP1 was used.

Each of the flexible polyurethane foams obtained in Examples 5 and 6 had a biomass degree at the same level as in Example 4, and had comparable foam physical properties.

Examples 13 to 16 are examples in which a polyoxyalkylene polyol prepared by using the DMC catalyst was used. Since each of the obtained flexible polyurethane foams was produced by using POP2 or 3, although the proportion of the polymer particles in the polyol-containing mixture excluding the polyisocyanate compound was at the same level as in Example 4, the viscosity of the reactive mixture was remarkably low. In addition, it was confirmed that they had low hysteresis loss, low compression set and low compression set under humid condition, and had high durability, as compared with the flexible polyurethane foams obtained in Examples 5 and 6. This is considered to be because the hydroxy values of the polyoxyalkylene polyols (A2-2) and (A2-3) used are higher than the hydroxy value of (A2-1). In order to improve the durability, the hydroxy value of the polyoxyalkylene polyol to be used is preferably from 5 to 25 mgKOH/g, particularly preferably from 5 to 20 mgKOH/g.

The liquid flowability of each of the reactive mixtures in Examples 8 and 9 was remarkably improved as compared with the liquid flowability of the reactive mixture in Example 7. Since the liquid flowability is improved when POP2 or 3 is used as in Examples 8 and 9, molding for production of a urethane sheet cushion with a more complicated mold shape is possible.

As described above, in Examples 2, 3, 5, 6, 8, 9 and 13 to 16 which are Examples of the present invention, the viscosity of the polymer-dispersed polyol can be made low, and the liquid flowability of the reactive mixture at the time of production of a foam can be improved, without lowering the biomass degree of the foam and the foam physical properties, as compared with Example 1, 4 and 7.

Further, as shown in Examples 11 and 12, by using POP2 or 3, a higher biomass degree of a urethane foam could be realized.

INDUSTRIAL APPLICABILITY

The polymer-dispersed polyol (A1) of the present invention is used as a material of a flexible polyurethane foam. That is, by reacting a polyol (A) containing the polymer-dispersed polyol (A1) of the present invention and a polyisocyanate compound (B) in the presence of a catalyst (C) and a blowing agent (D), a flexible polyurethane foam is obtained. This flexible polyurethane foam can be used as an automobile interior material.

The entire disclosure of Japanese Patent Application No. 2009-231931 filed on October 5, 2009 including specification, claims, and summary is incorporated herein by reference in its entirety.

**Claims**

1. A polymer-dispersed polyol (A1), comprising polymer particles dispersed in a matrix containing a polyol (a1) derived from a natural fat/oil and an epoxidized natural fat/oil (x).

2. The polymer-dispersed polyol (A1) according to Claim 1, wherein the content of the polymer particles is from 3 to 50 mass% based on 100 mass% of the polymer-dispersed polyol (A1).

3. The polymer-dispersed polyol (A1) according to Claim 1 or 2, wherein the content of the polyol (a1) derived from a natural fat/oil is from 5 to 80 mass%, and the content of the epoxidized natural fat/oil (x) is from 95 to 20 mass% based on 100 mass% of the matrix excluding the polymer particles in the polymer-dispersed polyol (A1).

4. A process for producing a polymer-dispersed polyol (A1), which comprises polymerizing a vinyl monomer in a medium containing a polyol (a1) derived from a natural fat/oil and an epoxidized natural fat/oil (x).

5. The process for producing a polymer-dispersed polyol (A1) according to Claim 4, wherein the medium contains from 5 to 80 mass% of the polyol (a1) derived from a natural fat/oil and from 95 to 20 mass% of the epoxidized natural fat/oil (x) based on the total amount of the polyol (a1) derived from a natural fat/oil and the epoxidized natural fat/oil (x).

6. A process for producing a polymer-dispersed polyol (A1), which comprises adding an epoxidized natural fat/oil (x) to a polymer-dispersed polyol obtainable by polymerizing a vinyl monomer in a medium containing a polyol (a1) derived from a natural fat/oil.

7. The process for producing a polymer-dispersed polyol (A1) according to Claim 6, wherein the addition amount of the epoxidized natural fat/oil (x) is from 20 to 95 mass% based on the total amount of the polyol (a1) derived from a natural fat/oil and the epoxidized natural fat/oil (x).

8. A process for producing a polymer-dispersed polyol (A1), which comprises adding a polyol (a1) derived from a natural fat/oil to a polymer-dispersed polyol obtainable by polymerizing a vinyl monomer in a medium containing an epoxidized natural fat/oil (x).

9. The process for producing a polymer-dispersed polyol (A1) according to Claim 8, wherein the addition amount of the polyol (a1) derived from a natural fat/oil is from 5 to 80 mass% based on the total amount of the polyol (a1) derived from a natural fat/oil and the epoxidized natural fat/oil (x).

10. A process for producing a flexible polyurethane foam, which comprises reacting a polyol (A) containing the polymer-dispersed polyol (A1) as defined in any one of Claims 1 to 3, and a polyisocyanate compound (B), in the presence of a catalyst (C) and a blowing agent (D).

11. The process for producing a flexible polyurethane foam according to Claim 10, wherein the polyol (A) contains the following polyoxyalkylene polyol (A2):

    polyoxyalkylene polyol (A2): a polyoxyalkylene polyol (A2) having an average of from 2 to 8 hydroxy groups and a hydroxy value of from 10 to 160 mgKOH/g.

12. The process for producing a flexible polyurethane foam according to Claim 11, wherein the ratio (A1)/(A2) of the polymer-dispersed polyol (A1) to the polyoxyalkylene polyol (A2) contained in the polyol (A) is from 10/90 to 90/10 (mass ratio).

13. The process for producing a flexible polyurethane foam according to Claim 11 or 12, wherein the polyoxyalkylene polyol (A2) contains a polyoxyalkylene polyol derived from petroleum.

14. A flexible polyurethane foam for an automobile interior material, which is produced by the process as defined in any one of Claims 10 to 13.

## INTERNATIONAL SEARCH REPORT

| | International application No. |
|---|---|
| | PCT/JP2010/067462 |

**A. CLASSIFICATION OF SUBJECT MATTER**
*C08F2/44*(2006.01)i, *C08F291/06*(2006.01)i, *C08G18/63*(2006.01)i, *C08G101/00*(2006.01)n

According to International Patent Classification (IPC) or to both national classification and IPC

**B. FIELDS SEARCHED**

Minimum documentation searched (classification system followed by classification symbols)
C08F2/00-2/60, C08F291/00-297/08, C08G18/00-18/87

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2009/001783 A1 (Asahi Glass Co., Ltd.), 31 December 2008 (31.12.2008), claims 1 to 15 & EP 2161289 A1 | 1-14 |
| A | JP 2002-508417 A (Bayer AG.), 19 March 2002 (19.03.2002), claims 1 to 24; paragraph [0048] & US 6013731 A & WO 1999/031160 A1 | 1-14 |
| A | JP 7-238144 A (Asahi Glass Co., Ltd.), 12 September 1995 (12.09.1995), claims 1 to 8; paragraphs [0055], [0056] (Family: none) | 1-14 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 October, 2010 (22.10.10) | 02 November, 2010 (02.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009001783 A
- JP 2003342361 A
- JP 2009231931 A